# EUROPEAN PATENT SPECIFICATION

(11) **EP 0 587 697 B1**
(45) Date of publication and mention of the grant of the patent: **04.12.1996**
(21) Application number: 92911941.0
(22) Date of filing: 04.06.1992
(51) Int. Cl.: C09B 69/10, C08L 101/00, C08G 63/68, C08G 69/00, C08G 73/06, C08G 75/20, C08G 75/30

(54) **LIGHT-ABSORBING POLYMERS**
LICHTABSORBIERENDE POLYMERE
POLYMERES ABSORBANT LA LUMIERE

(30) Priority: 07.06.1991 US 711774
(43) Date of publication of application: 23.03.1994
(73) Proprietor: EASTMAN CHEMICAL COMPANY, Kingsport, TN 37660 (US)
(72) Inventor: WEAVER, Max, Allen, Kingsport, TN 37664 (US); KRUTAK, James, John, Sr., Kingsport, TN 37663 (US); COATES, Clarence, Alvin, Jr., Kingsport, TN 37664 (US); PRUETT, Wayne, Payton, Kingsport, TN 37663 (US); HILBERT, Samuel, David, Jonesborough, TN 37659 (US)
(74) Representative: Behrens, Dieter, Dr.-Ing.
(86) International application number: US9204442
(87) International publication number: WO9221725

(56) References cited:
- EP-A- 0 318 294
- EP-A- 0 329 396
- DE-A- 3 320 393
- FR-A- 2 375 273
- US-A- 5 030 708

## Description

This invention belongs to the field of polymer chemistry. More particularly, this invention relates to light absorbing polymers containing methine linkages and to thermoplastic polymers to which said light absorbing polymers have been added.

### Background of the Invention

It is well known, of course, to color thermoplastic polymeric compositions using pigments and soluble dyes. (See, for example, Coloring of Plastics, T. G. Weber, ed., John Wiley & Sons, New York, 1979.) Plastics colored with pigments are usually opaque and may lack brilliance of color afforded by soluble dyes. Use of pigments is also often accompanied by problems in storage, blending, uniformity, etc. Some of the deficiencies encountered in the use of pigments can be overcome by use of soluble dyes which give improved clarity and brilliance, but this approach often results in migration and problems related to solvent extraction of the dye from the thermoplastic resins. Some improvement in solvent extraction and migration properties has been achieved by incorporating poly(oxyalkylene) polymer units into colorants. (See U.S. Patent No. 4,640,690). These colorants have the disadvantage, however, of having a significant portion of their weight consisting of non-colored polymeric composition. U.S. Patent No. 4,116,923 teaches the incorporation of reactive colorants into cross-linked polyester resins and the use of these colored polyester resins in coloring thermoplastic polymers such as polyolefins. Here again, a major portion of the colored polyester resin used to color the polyolefins is "non-colored", and thus results in lower tinctorial strength. Further, it is known that one may improve the nonextractability of colorants and UV absorbers in thermoplastic polyesters by copolymerizing thermally stable colorants into the backbone of the polyester composition. (See U.S. Patent Nos. 4,617,373; 4,617,374; and 4,707,537.) This method suffers from the difficulty in finding non-volatile, very reactive colorants which will not be lost by volatilization or decomposition during the stages of ester interchange and polycondensation of the polyester preparation.

It is also known that one may color thermoplastic polymeric materials using color concentrates consisting of physical admixtures of polymers and colorants. However, the use of such physical admixtures to color polymeric materials such as polyesters, e.g., poly(ethylene terephthalate) and blends thereof, presents a number of problems:
1. Colorant migration during drying of the colored polymer pellets.
2. Colorant migration during extrusion and colorant accumulation on dies which can cause film rupture and shut-downs for clean-up, etc. Such colorant migration and accumulation result in time consuming and difficult clean-up when a polymer of another color is subsequently processed in the same equipment.
3. Colorants may not mix well, for example, when using two or more color concentrates to obtain a particular shade.
4. Colorants may diffuse or exude during storage of the colored polymeric material.

### Summary of the Invention

This invention relates to polymeric light absorbing compounds which contain methine linkages. The compounds are thermally stable and are useful in imparting UV and/or visible light absorbing properties to a variety of polymeric substrates, particularly thermoplastic polymers. Their low volatility allows them to be added during high temperature polymerizations such as is encountered in preparation of polyesters or in subsequent melt-blending with polymeric substrates. The polymeric compounds are less volatile and less extractable from the thermoplastic polymers than are typical monomeric colorants and UV absorbers.

This invention relates to polymeric light absorbing compounds described by Formula (I)

(̵A=HC-B)̵ₙ (I)

and thermoplastic resin compositions to which (I) has been incorporated to impart UV and visible light absorbing properties; wherein A is the residue of an organic active methylene group and B is a divalent organic moiety which contains at least one carbocyclic or heterocyclic aromatic ring bonded directly to the methylidine moiety; and wherein n is an integer of at least 2.

Compounds of Formula (I) are useful in imparting light absorbing properties to polymeric substrates, particularly thermoplastic polymers. Their excellent thermal stability allows them to be added during preparation of the polymer or to be melt blended with the polymeric substrates. The polymeric compounds are less volatile and less extractable from the thermoplastic polymers than are the typical monomeric colorants, thus rendering the polymeric compositions useful for packaging materials, coatings, cosmetics, and home care products where nonexposure to humans is desirable.

### Detailed Description of the Invention

Plastics, paints, printing inks, rubber, cosmetics, e.g., lipsticks, etc., are usually colored by organic colorants when superior brilliance and tinctorial strength are advantageous. Toxicity has been a chronic problem related to the use of these materials as some have been shown to be potential carcinogens and to cause contact dermatitis, for example. Recent publications document the continued concern. (See, for example, Federal Register, July 15, 1988 and ACTA Derm Venerol., Suppl., 1987, 134, pp. 95-97.) Plastics usually consist of large macromolecules and other ingredients such as fillers, plasticizers, colorants, etc. Most polymers do not produce allergic reactions by themselves, but leachable additives are known to cause contact dermatitis. (S. Fregert, Manual of Contact Dermatitis, Munkgard, Denmark, 2nd Ed. 1981.)

The overall purpose of this invention is to provide colorants and UV absorbers which can be incorporated into thermoplastic polymeric compositions wherein the light absorbing compounds are thermally stable, have low extractability, volatility, sublimation, and which do not exude from the polymeric substrate. These polymeric compositions containing the light absorbing properties are useful as packaging materials, films, fibers, etc., since exposure to toxic molecules readily absorbed by the body is greatly minimized. Of course, when visible light is absorbed the polymeric compositions are colored. The presence of UV light absorbing compounds in polymeric compositions provides protection from harmful UV light rays for products packaged or contained therein and provides increased stabilization of the polymer itself to sunlight.

The present invention provides a polymer represented by Formula (I)

(̵A=HC-B)̵ₙ (I)

wherein active methylene residues (A) are selected from the formulae: 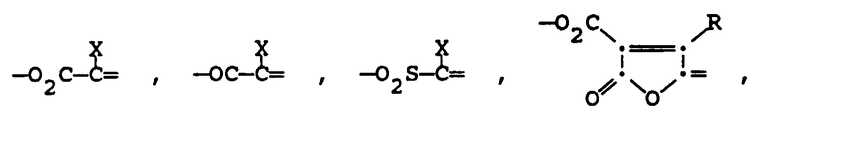 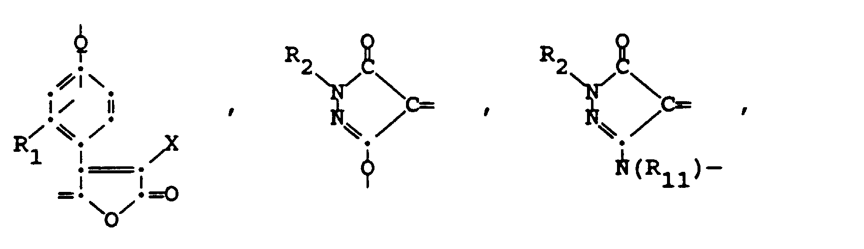 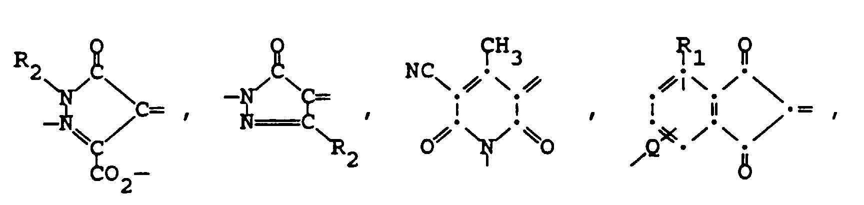 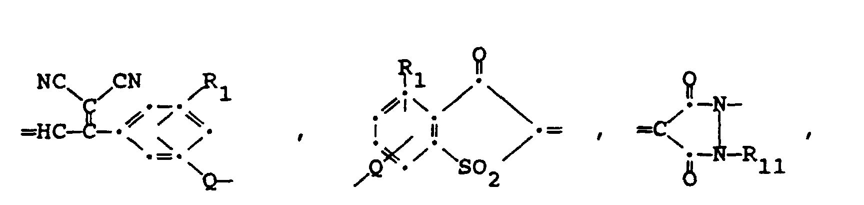 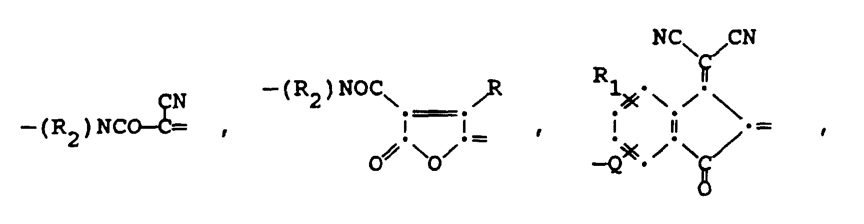 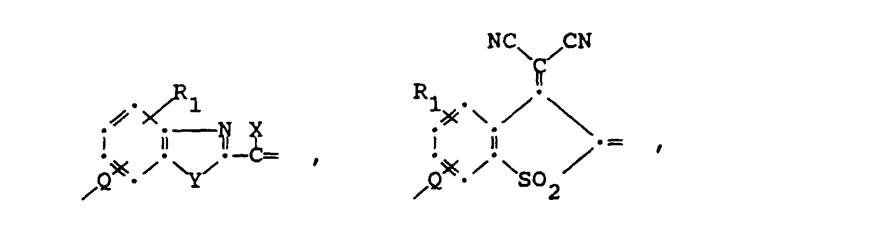 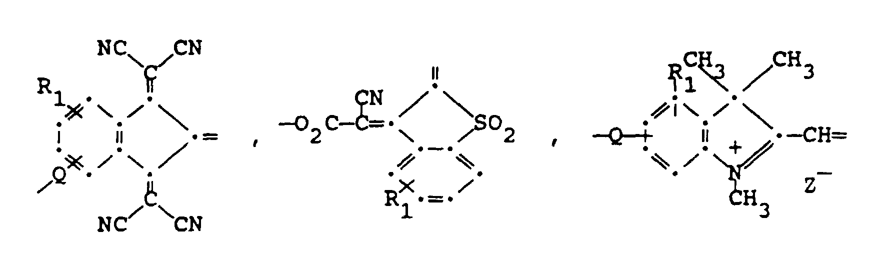 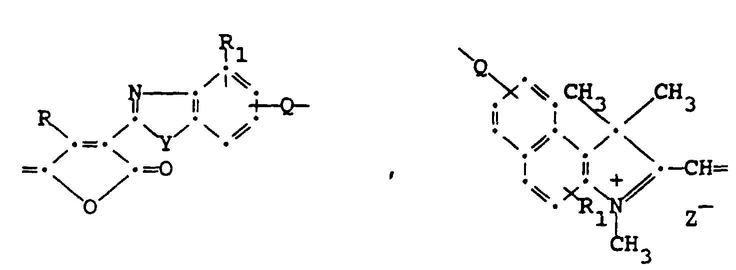 or 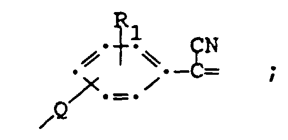
wherein Q is selected from a covalent bond, -CO₂-, -CO-, -S-, -O-, -SO₂-, -CON(R₂)-, -N(SO₂R₃)- or -SO₂N(R₂)-;
X is selected from cyano; unsubstituted and substituted carboxylic acid ester; unsubstituted and substituted carbamoyl; unsubstituted or substituted alkylsulfonyl; C₃-C₈ cycloalkylsulfonyl; or arylsulfonyl or unsubstituted or substituted carbocyclic or heterocyclic aryl;
Y is selected from -O-, -S-, -NH- or substituted imino;
Z⁻ is a counter anion;
R is hydrogen, lower alkyl, or unsubstituted or substituted carbocyclic or heterocyclic aryl;
R₁ is selected from hydrogen or 1-2 groups selected from lower alkyl, lower alkoxy or halogen;
R₂ is selected from hydrogen, unsubstituted or substituted lower alkyl, C₃-C₈ cycloalkyl or unsubstituted or substituted carbocyclic or heterocyclic aryl;
R₂' is selected from -OR₃, NHR₃ or one of the groups listed for R₂,
R₃ is unsubstituted or substituted alkyl; C₃-C₈ cycloalkyl or unsubstituted carbocylic or heterocyclic aryl;
and wherein the divalent moiety B is represented by one of the following formulae: 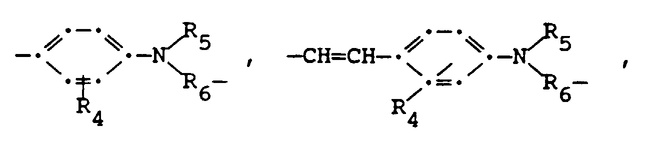 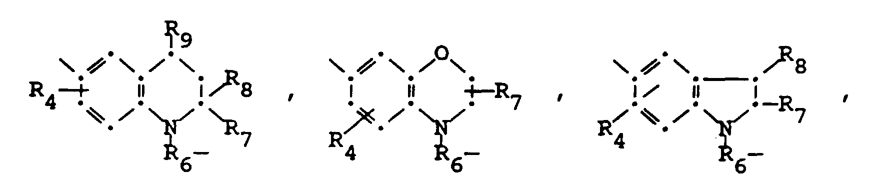 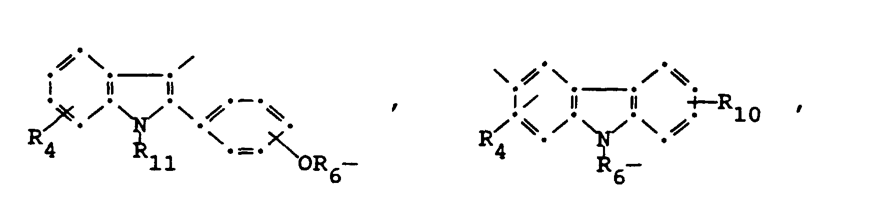 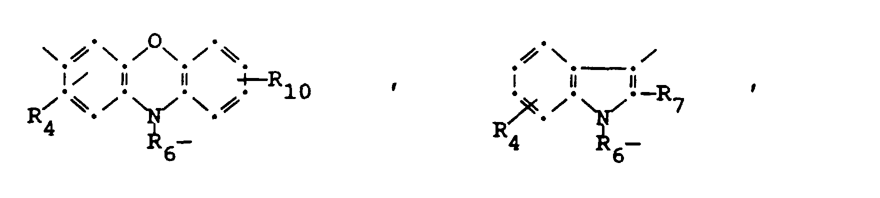 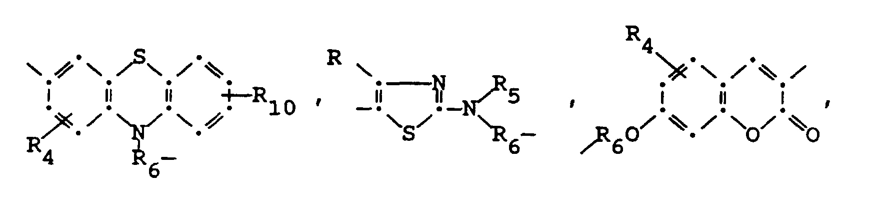 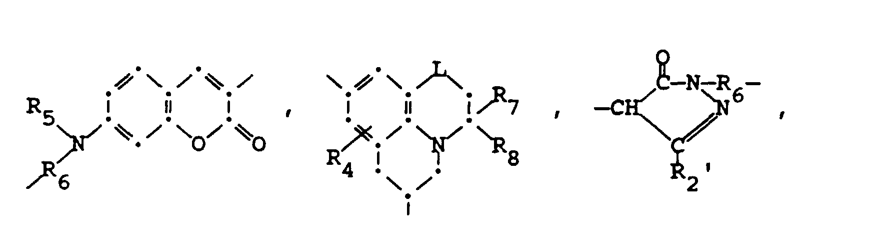 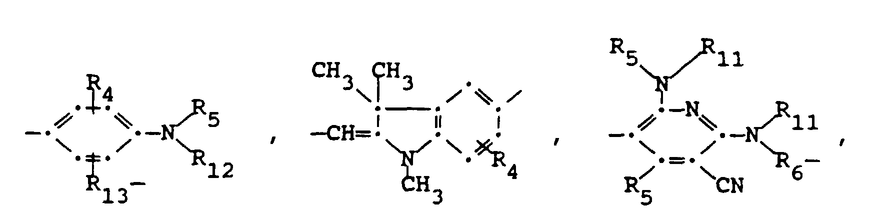 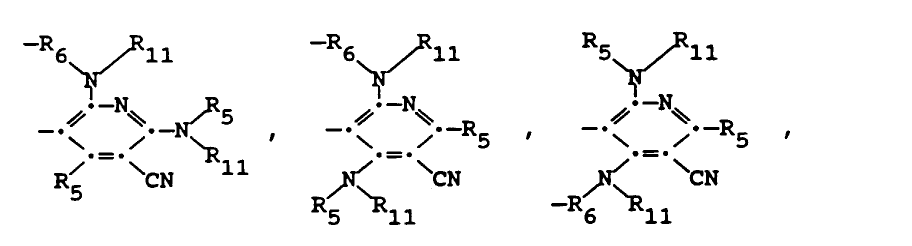 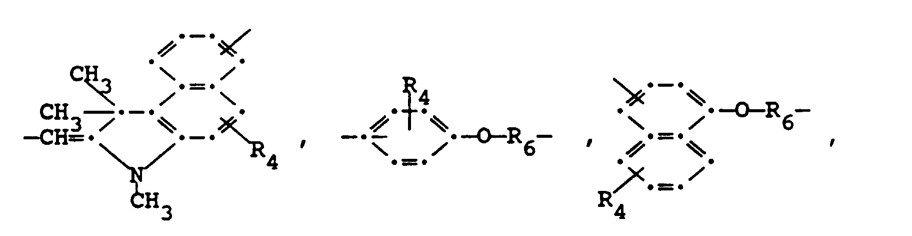 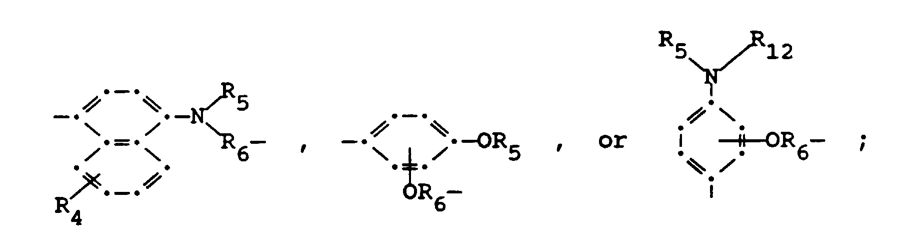 wherein R₄ and R₁₀ are hydrogen or 1-2 substituents selected from lower alkyl, lower alkoxy or halogen;
R₅ and R₁₂ are selected from unsubstituted lower alkyl, lower alkenyl, lower alkynyl, C₃-C₈ cycloalkyl, or phenyl and substituted lower alkyl, C₃-C₈ cycloalkyl and phenyl;
R₆ is selected from unsubstituted or substituted lower alkylene, C₃-C₈ cycloalkylene, phenylene, alkylenephenylenealkylene, alkylene-(C₃-C₈)cycloalkylenealkylene, alkylene-O-alkylene, alkylene-S-alkylene, alkylene-SO₂-alkylene, alkylene-O-phenylene-O-alkylene, alkylene-N(SO₂R₃)alkylene or alkylene-phenylene;
R₇, R₈, R₉ are hydrogen or alkyl;
R₁₁ is hydrogen, lower alkyl or aryl;
R₁₃ is selected from lower alkylene, -O-R₆- or -N(SO₂R₃)-R₆-;
L is selected from a direct bond, -O-, -CH₂- or -CH(CH₃)-; and n is an integer of from 2 to about 40.

Of course, as will be appreciated by those skilled in the art, the polymers of Formula (I) are terminated with an aldehyde or active methylene group present on the starting monomer.

In a preferred embodiment of the invention, in the polymers represented by repeating units of Formula (I) above the active methylene moiety A has the structure -O₂C-C(CN)= and B is selected from the following formulae: 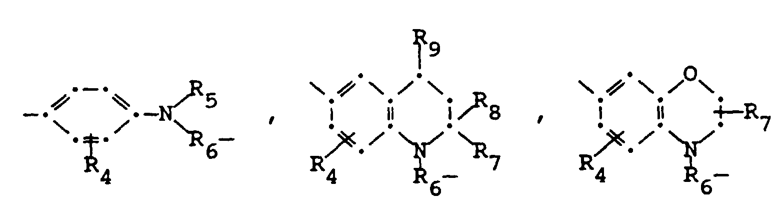 or 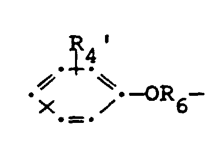 wherein R₄, R₇, R₈, and R₉ are as defined above; R₄' is selected from hydrogen or alkoxy;
R₅ is selected from the following groups: lower alkenyl; cycloalkyl; cycloalkyl substituted with one or two of lower alkyl, lower alkoxy or halogen; phenyl and phenyl substituted with one or two of lower alkyl, lower alkoxy, alkoxycarbonyl, halogen, alkanoylamino, cyano, nitro or alkylsulfonyl; straight or branched chain alkyl of 1-8 carbons and such alkyl groups substituted with one or more of the following: cycloalkyl and cycloalkyl substituted with one or two of lower alkyl, lower alkoxy or halogen; phenyl and phenyl substituted with one or two of lower alkyl, lower alkoxy, alkoxycarbonyl, halogen, alkanoylamino, cyano, nitro or alkylsulfonyl; cyano; halogen; 2-pyrrolidino; phthalimidino; vinylsulfonyl; acrylamido; o-benzoic sulfimido; alkoxy; alkoxyalkoxy; cyanoalkoxy; phenoxy; phenoxy substituted with lower alkyl, lower alkoxy, or halogen; groups of the formulae: 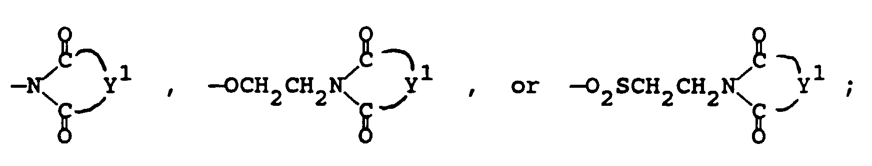 wherein Y¹ is selected from o-phenylene; o-phenylene substituted with lower alkyl, lower alkoxy, halogen or nitro; -O-CH₂-; -OCH₂CH₂-; -CH₂OCH₂-; -S-CH₂-; -CH₂SCH₂-; -NHCH₂-; -NHCH₂CH₂-; -N(alkyl)CH₂-; -N(alkyl)CH₂CH₂- or -NHC(C₆H₅)₂-; groups of the formulae:
-S-R₁₄, -SO₂C₂H₄SR₁₄, 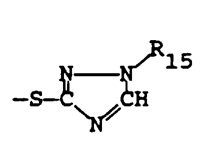 or 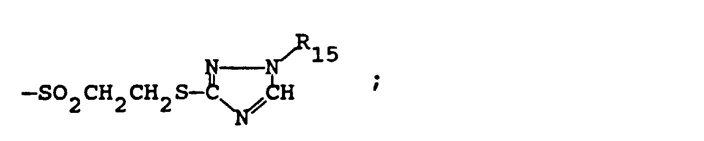 wherein R₁₄ is selected from lower alkyl; cycloalkyl; phenyl; phenyl substituted with one or more groups selected from lower alkyl, lower alkoxy or halogen; pyridyl; pyrimidinyl; benzoxazolyl; benzothiazolyl; benzimidazolyl; 1,3,4-thiadiazolyl, 1,3,4-oxadiazolyl; these heterocyclic radicals substituted with one or more groups selected from lower alkyl, lower alkoxy or halogen; wherein R₁₅ is selected from hydrogen, lower alkyl or benzyl; groups of the formulae:

-SO₂R₁₆; -SO₂N(R₁₇)R₁₈; -CON(R₁₇)R₁₈; and N(R₁₇)COR₁₈ ;

wherein R₁₆ is selected from cycloalkyl; cycloalkyl substituted with alkyl; allyl; phenyl; phenyl substituted with one or two groups selected from lower alkyl, lower alkoxy or halogen; lower alkyl; lower alkyl substituted with one or more groups selected from lower alkoxy, halogen, cyano, cycloalkyl, phenyl, phenoxy, alkylthio or alkylsulfonyl;
R₁₇ and R₁₈ are each independently selected from hydrogen or those groups represented by R₁₆;
R₆ is selected from lower alkylene, alkylene-O-alkylene or alkylene-S-alkylene; and
R₄' is hydrogen or lower alkoxy.

The terms "substituted alkyl" and "substituted alkylene" preferably refer to an alkyl group and an alkylene group, respectively, substituted by one or more halogen, phenyl, phenoxy, C₁-C₄ alkanoyloxy, hydroxy, amino, C₁-C₆ alkoxycarbonyl, nitro, carboxy, C₁-C₆ alkylsulfonyl, cyclohexyl, carbamoyl, cyano, C₁-C₆ alkylsulfonylamino or C₁-C₆ alkoxy groups. The substituted alkyl groups may be substituted one or more times with the same or with different substituents. Preferably, the alkyl portion contains from one to ten carbon atoms, most preferably from one to six carbon atoms.

Examples of the above substituted alkyl groups include cyanoethyl, nitroethyl, hydroxymethyl, trityloxymethyl, propionyloxyethyl, aminomethyl, carboxymethyl, allyloxycarbonylmethyl, allyloxycarbonylaminoethyl, carbamoyloxyethyl, methoxyethyl, ethoxyethyl, t-butoxybutyl, acetoxyethyl, chloromethyl, bromohexyl, iodomethyl, 6-hydroxyhexyl, 2,4-dichloro(n-butyl), 2-amino(iso-propyl), 2-carbamoyloxyethyl, chloroethyl, bromoethyl, fluoroethyl, iodoethyl, chloropropyl, bromopropyl, fluoropropyl, iodopropyl, and the like.

The term "aryl" as used herein refers to heterocyclic aryl rings and carbocyclic aryl rings. For example, aryl can be phenyl, naphthyl, phenanthryl, and the like. Aryl can also be 5 or 6-membered heterocyclic aryl rings containing one oxygen atom, and/or one sulfur atom, and up to three nitrogen atoms, said heterocyclic aryl ring optionally fused to one or two phenyl rings. Examples of such ring systems include thienyl, furyl, pyrrolyl, imidazolyl, pyrazolyl, thiazolyl, isothiazolyl, oxazolyl, isoxazolyl, triazolyl, thiadiazolyl, oxadiazolyl, tetrazolyl, thiatriazolyl, oxatriazolyl, pyridyl, pyrimidyl, pyrazinyl, pyridazinyl, thiazinyl, oxazinyl, triazinyl, thiadiazinyl, oxadiazinyl, dithiazinyl, dioxazinyl, oxathiazinyl, tetrazinyl, thiatriazinyl, oxatriazinyl, dithiadiazinyl, imidazolinyl, dihydropyrimidyl, tetrahydropyrimidyl, tetrazolo, 1,5-b]pyridazinyl and purinyl, benzoxazolyl, benzothiazolyl, benzimidazolyl, indolyl and the like.

Accordingly, the term "substituted aryl" preferably refers to such aryl rings substituted by one or more halogen, phenoxy, phenyl, hydroxy, amino, C₁-C₆ alkoxycarbonyl, nitro, alkylsulfonyl, carboxy, cyclohexyl, carbamoyl, cyano, C₁-C₆ alkylsulfonylamino or C₁-C₆ alkoxy groups.

The term alkoxycarbonyl preferably refers to an C₁-C₆ alkoxy group bonded to a carbonyl function. In other words, the C₂ alkoxycarbonyl group is ethoxycarbonyl. The term substituted alkoxycarbonyl refers to an C₁-C₆ alkoxycarbonyl group substituted with one or more halogen, phenyl, phenoxy, hydroxy, amino, C₁-C₆ alkoxycarbonyl, nitro, carboxy, cyclohexyl, carbamoyl, cyano, C₁-C₆ alkylsulfonylamino, or C₁-C₆ alkoxy groups.

The terms "alkyl" and "alkylene" as used herein preferably refer to C₁-C₁₂ straight or branched chain alkyl and alkylene groups respectively. The terms "lower alkyl", and "lower alkylene" preferably refer to a C₁-C₆ straight or branched-chain alkyl and alkylene group, respectively. The terms "lower alkenyl" and "lower alkynyl" refer to C₃-C₆ alkenyl groups and C₃-C₆ alkynyl groups, respectively.

The term "unsubstituted and substituted carboxylic acid ester" preferably refers to C₁-C₈ alkyl, C₃-C₈ cycloalkyl or aryl oxycarbonyl group, preferably containing from 2 to 10 carbon atoms and optionally substituted with halogen, C₁-C₆-alkoxy, C₃-C₈ cycloalkyl, aryl, aryloxy, C₁-C₆-alkyl, cyano, C₁-C₆ alkanoyloxy, hydroxy or C₁-C₆ alkoxycarbonyl.

The term "unsubstituted and substituted carbamoyl" refers to an alkyl (or substituted alkyl) amino carbonyl group, preferably containing from 2 to 10 carbon atoms.

The term "substituted imino" refers to an imino group substituted with a group selected from hydrogen, C₁-C₆ alkyl, C₃-C₈ cycloalkyl or aryl.

The term "Z⁻" refers to any counter anion. Preferably, Z⁻ is selected from Br⁻, Cl₋, I⁻, CH₃SO₄⁻, or ZnCl₄⁼/2.

Light-absorbing polyesters of Formula (I) can be prepared by self-condensation of a "monomeric" compound containing an aromatic aldehyde group and an active methylene moiety under Knoevenagel reaction conditions using a basic catalyst. Typical monomers useful in the practice of the invention include the following:

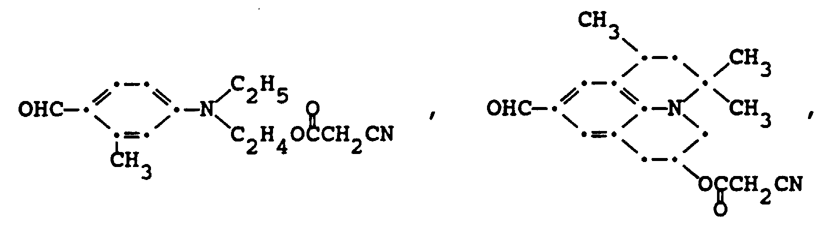

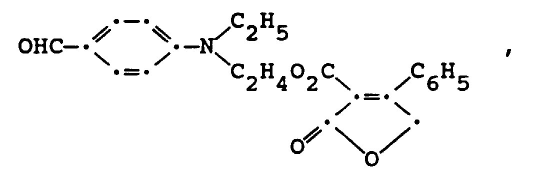

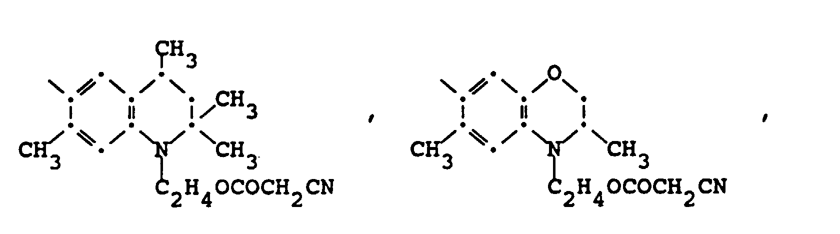

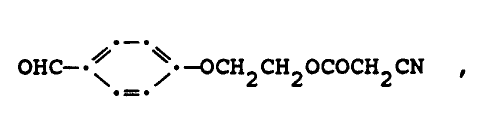

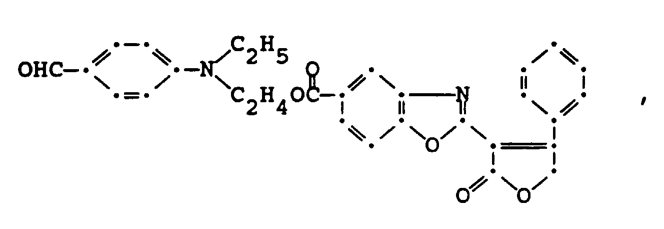

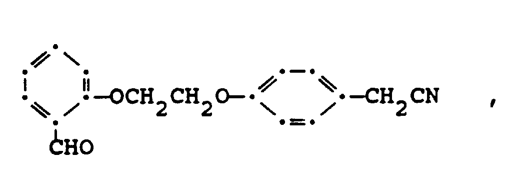

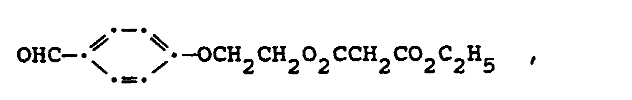

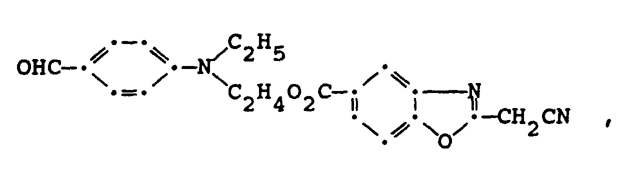

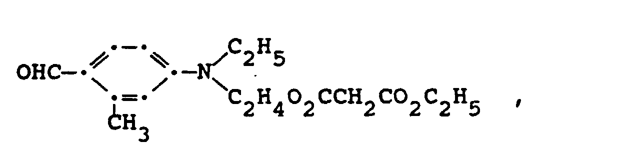

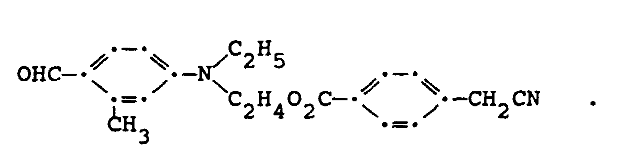

The polymeric light absorbing Compounds I may be prepared by three general Routes I, II, and III. In Route I, an aromatic aldehyde compound which contains a reactive group (e.g. hydroxy) is reacted with an active methylene compound which has a reactive group (e.g., an ester) to produce an intermediate which contains an aldehyde group and active methylene group in the same molecule. Polymerization is then brought about by a basic catalyst.

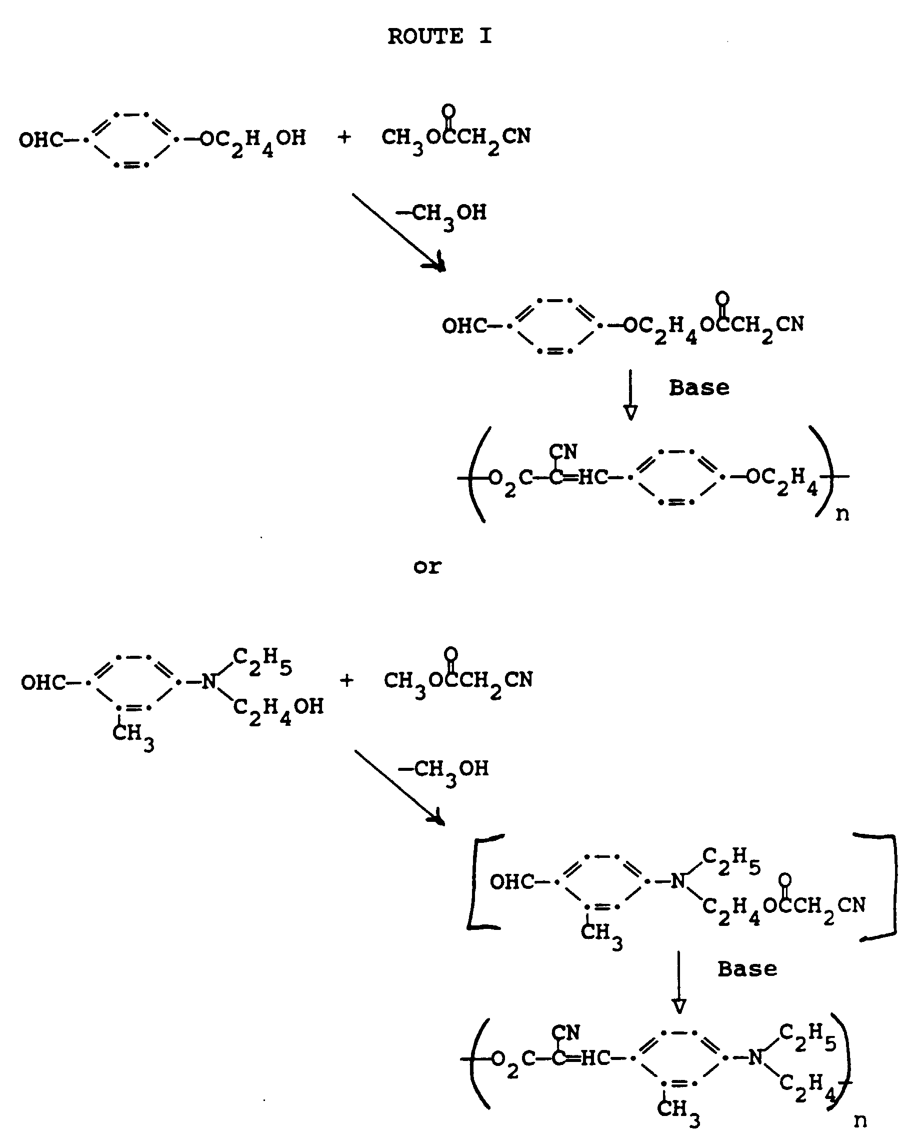

Usually, the intermediate monomer, which contains both the aldehyde and active methylene groups, is not isolated but is treated with base to facilitate the Knoevenagel type condensation. Bases such as piperidine, piperidine acetate, sodium acetate and pyridine are effective catalysts. Solvents such as alcohols, glycol ethers, N,N-dimethylformamide, N,N-dimethylacetamide and N-methyl-2-pyrrolidinone are convenient. Sometimes with the active methylenes of lesser reactivity, completion of the reaction may be facilitated by use of solvent or co-solvent such as refluxing benzene, toluene or xylene, whereby the water thus formed can be removed azeotropically as it is produced.

In Route II, an aromatic aldehyde which contains an additional reactive group can be reacted with an active methylene compound which contains an additional reactive group. The intermediate methine compound itself serves as a "monomer" and is self-condensed to yield the polymer. For example, when the additional reactive 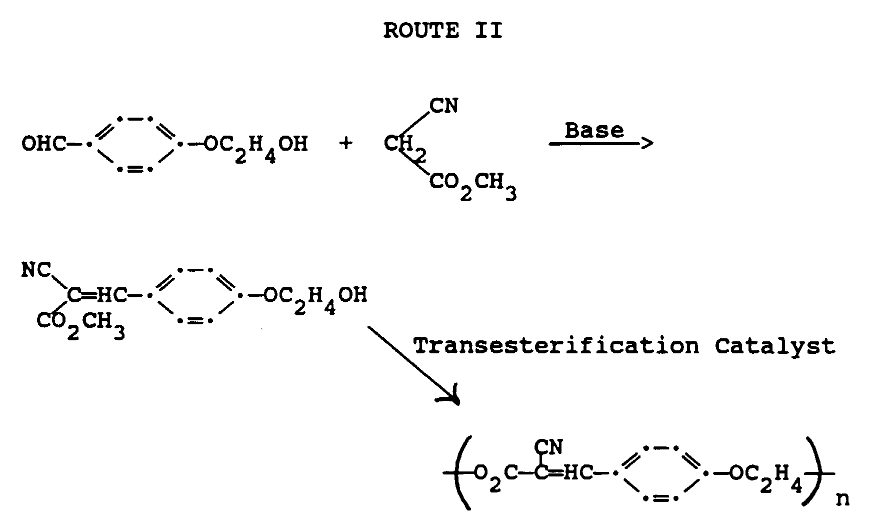 groups are hydroxy and carboxy or carboxylate, a polymer can be produced under esterification or transesterification conditions. In Route III, an aromatic amine compound which contains a reactive group is reacted with an active methylene compound containing a reactive group to give an intermediate which will undergo the Vilsmeier-Haack reaction to introduce an aldehyde group. Treatment of the bi-functional intermediate with base facilitates the Knoevengal type condensation to produce the light absorbing polymer.

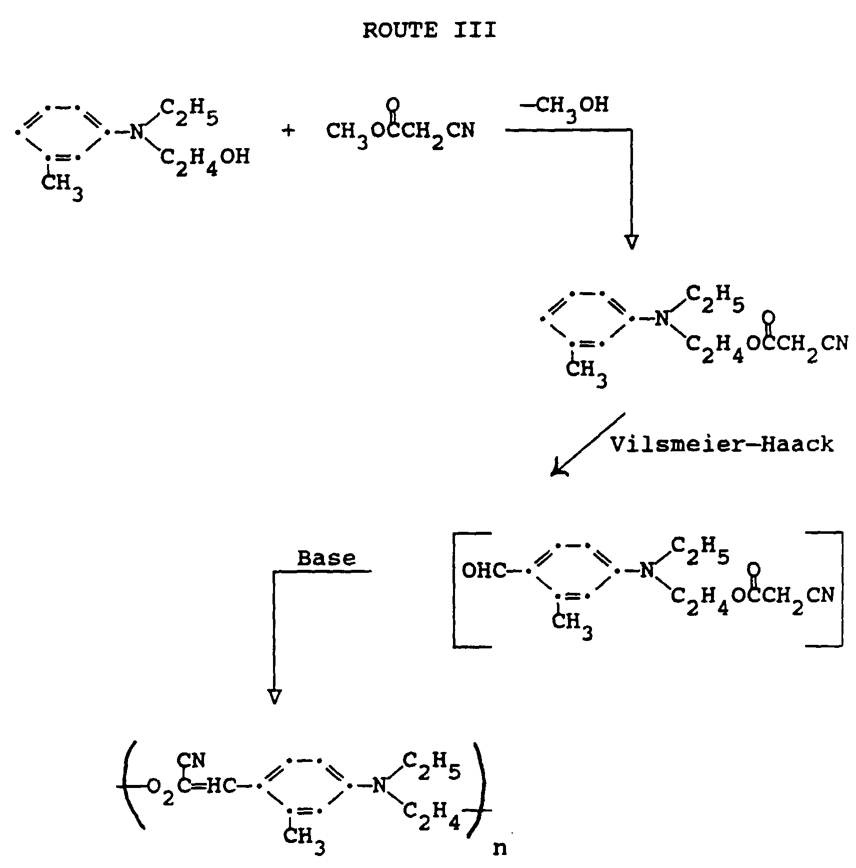

As in Route I, the intermediates which contain the aldehydes and active methylene groups are not usually isolated but treated with base to facilitate the Knoevenagel type condensation.

The novel light-absorbing concentrates and their preparation are further illustrated by the experimental section below. The inherent viscosities specified herein are determined at 25°C using 0.5 g of polymer per 100 mL of a solvent consisting of 60 weight percent phenol and 40 weight percent tetrachloroethane. The weight average molecular weight (Mw) and number average molecular weight value referred to herein are determined by gel permeation chromatography. The melting temperatures are determined by differential scanning calorimetry on the first and/or second heating cycle at a scanning rate of 20°C per minute and are reported as the peaks of the transitions.

Thermoplastic resins colored by compounds of Formula (I) are characterized by good clarity and brilliance in contrast to compositions colored by the use of insoluble pigments. Compounds of Formula (I) have excellent light absorbing properties since they are truly "homopolymeric" in contrast to some of the known colorant compositions which have colorants attached to polymeric moieties which decrease the color yield when these colorant compositions are used to color thermoplastics polymers. Some of the compounds of Formula (I) absorb light in the visible spectrum, others in the ultraviolet spectrum, and others in both.

The amount of light-absorbing polymer added to the thermoplastic resin varies depending upon the end use and desired degree of light absorption, but in general is from about 0.001% to about 5% by weight.

The thermoplastic resin systems useful for blending with the light-absorbing concentrates of the present invention include polyesters such as poly(ethylene terephthalate); polyamides such as nylon 6 and nylon 66; polyolefins, e.g., polyethylene, polypropylene, polybutylene and copolymers made from ethylene, propylene or butylene. Other thermoplastic polymers include cellulosic resins such as cellulose acetate, cellulose propionate, or cellulose butyrate; acrylic resins such as polymethyl methacrylate; polycarbonates; polystyrene; polyacrylonitrile; polyvinylidene chloride; polyvinyl chloride, etc.

The following Experimental Section is provided to further illustrate the invention but should not be construed as limiting the scope thereof.

### EXPERIMENTAL SECTION

### Example 1 - Preparation of Polymeric UV Light Absorbing Compound

A mixture of 4-(2-hydroxyethoxy)-3-methoxybenzaldehye (1.96 g, 0.01 m), methyl cyanacetate (0.99 g, 0.01 m) and N,N-dimethylformamide (15 g) is heated to 140°C and then cooled to < 100°C. Toluene (15 g) and 0.5 mL of an n-butanol solution of titanium isopropoxide which contains 0.0128 g Ti/mL are added. The reaction mixture is refluxed for eight hours under a Dean-Stark trap filled with toluene and then allowed to cool. The pale yellow polymeric product which crystallizes is collected by filtration, washed with methanol, and dried in air. A yield of 1.2 g of product is obtained which has an absorption maximum (λ max) in the UV absorption spectrum at 364 nm in trifluoracetic acid solvent.

The proposed structure is as follows: 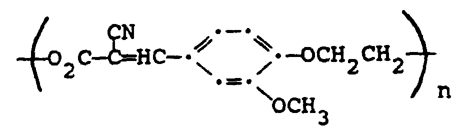 λ max - 364 nm (CF₃COOH)

The polymer has a weight average molecular weight of 4,563, a number average molecular weight of 3,600 and a polydispersity index of 1.27.

### Example 2 - Preparation of N-ethyl-N-[[2(α-cyano) acetyloxy]ethyl]-3-methylaniline

A mixture of N-ethyl-N-(2-hydroxyethyl)-3-methylaniline (89.6 g, 0.50 m), cyanoacetic acid (85.0 g, 1.0 m), toluene (300 mL) and p-toluenesulfonic acid (0.2 g) is heated and stirred in a flask equipped with a Dean-Stark trap filled with toluene for two hours and the water removed as it is formed. The cooled reaction solution is extracted with 150 mL of water containing 10 mL of conc. NH₄OH and then with 3-150 mL portions of water. The toluene layer is then dried over sodium sulfate. Toluene is removed under reduced pressure to yield 99.5 g (80.9% of the theoretical yield of oily product having the following structure:

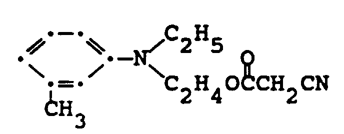

### Example 3 - Preparation of Polymeric Methine Yellow Colorant

The intermediate aniline compound from Example 2 (24.6 g, 0.10 m) is dissolved in N,N-dimethylformamide (40 mL) and the solution cooled. Phosphorous oxychloride (15.3 g) is added dropwise at 10-15°C with stirring and then the reaction mixture is heated at 90-95°C for 2.5 hr, during which time a yellow color develops. The reaction mixture is allowed to cool and added to a stirred mixture of ethanol (300 mL), sodium acetate (50 g) and piperidine (3 mL). Heat is applied and the mixture is refluxed for about one hour. It is cooled and then drowned onto ice-water mixture. The somewhat sticky yellow product is washed with water by decantation. A solid polymeric yellow colorant is produced by slurrying in ethanol, filtering, washing with ethanol and drying in air (yield 8.6 g). The polymer has an I.V. of 0.085, a weight average molecular weight of 3,129, a number average molecular weight of 2,499, a polydispersity index of 1.25, a melting temperature Tm of 177°C and a glass transition temperature Tg of 77°C. The proposed structure is as follows: 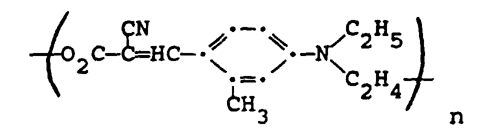 λ max - 442 nm (CH₂Cl₂) Polymeric Yellow Colorant

The polymeric yellow colorant has an absorption maximum (λ max) at 442 nm in methylene chloride.

### Example 4

The following materials are placed in a 500 mL three-necked, round bottom flask:
97 g (0.5 mol) dimethyl terephthalate
62 g (1.0 mol) ethylene glycol
0.00192 g Ti from a n-butanol solution of acetyl-triisopropyl titanate
0.0053 g Mn from an ethylene glycol solution of manganese acetate
0.0345 g antimony trioxide
0.0072 g Co from an ethylene glycol solution of cobaltous acetate
0.0384 g polymeric UV absorber of Example 1 (400 ppm)

The flask is equipped with a nitrogen inlet, stirrer, vacuum outlet, and condensing flask. The flask and contents are heated at 200°C in a Belmont metal bath for 60 minutes and at 210°C for 75 minutes with a nitrogen sweep over the reaction mixture. Then, 1.57 mL of an ethylene glycol slurry of a mixed phosphorous ester composition (Zonyl A) which contains 0.012 g phosphorous is added. The temperature of the bath is increased to 230°C and a vacuum with a slow stream of nitrogen blending in the system is applied over a five minute period until the pressure has been reduced to about 200 mm Hg. The flask and contents are heated at about 230°C under a pressure of about 200 mm Hg for 25 minutes. The metal bath temperature is then increased to about 270°C. At 270°C, the pressure is slowly reduced to about 100 mm Hg and the flask and contents heated at about 270°C for 30 minutes. The metal bath temperature is increased to 285°C and the pressure is reduced slowly to 4.5 mm Hg. The flask and contents are heated at 285°C under pressure of 4.5 mm Hg for 25 minutes. Then the pressure is reduced to 0.25 mm Hg and polycondensation is continued for 40 minutes. The flask is removed from the metal bath and is allowed to cool in a nitrogen atmosphere while the polymer crystallizes. The resulting polymer has an inherent viscosity of 0.60 as measured in a 60/40 ratio by weight of phenol/tetrachloroethane at a concentration of 0.5 g per 100 mL. An amorphous 13.5-mil thick film molded from this polymer to simulate the sidewall of a container transmits less than 10% light from 250 to about 375 nm, whereas a 13.5-mil film prepared from a like polyester without the absorber transmits greater than 10% light at all wavelengths above 320 nm. No loss of UV absorber during the polymerization by volatilization is observed.

### Example 5

The procedure of Example 4 is repeated except the polymeric UV absorber is added at 230°C after the ester interchange step to produce a polyester composition which has similar UV light absorbing properties to that of Example 4.

### Example 6

Poly(ethylene terephthalate), (Eastman PET 7352) (400 g) is granulated using a Wiley mill thru a 2 mm screen and then blended with the polymeric UV absorber of Example 1 (400 ppm) and ethylene glycol (3 g). This blend is dried in a vacuum oven at 110°C for 16 hours. A 15 mil film is prepared on a C. W. Brabender 3/4 in. extruder at 280°C. The UV absorbing properties of this film are similar to those prepared from the polymers of Examples 4 and 5.

### Example 7

The procedure of Example 4 is repeated using 0.0192 g (200 ppm) of the polymeric yellow colorant of Example 3. An amorphous 14 mil thick film is molded from this polymer which has an inherent viscosity of 0.56. In the absorption spectrum of the film, a maximum absorbance is observed at 439 nm which indicates good thermal stability of the yellow colorant. No loss of colorant is observed during the polymerization reaction by volatilization.

### Example 8

Poly(ethylene terephthalate) (Eastman PET 7352) (400 g) is granulated using a Wiley mill thru a 2 mm screen and then blended with the colorant of Example 3 (1000 ppm) and ethylene glycol (3 g). This blend is vacuum dried in an oven at 110°C for 16 hours. A 15 mil thick film extruded on a C. W. Brabender 3/4 in. extruder at 280°C has a maximum absorbance in the visible absorption at about 440 nm and has excellent clarity.

### Example 9

Polypropylene (Eastman Tenite 4235) (300 g) which has been granulated on a Wiley Mill using a 2 mm screen is dry blended with 1000 ppm (0.30 g) of polymeric yellow colorant of Example 3. The sample is extruded on a C. W. Brabender 3/4 in. extruder at 240°C to product a 15 mil film which has a reddish-yellow color.

The present invention is further illustrated by the examples of Tables I-II.

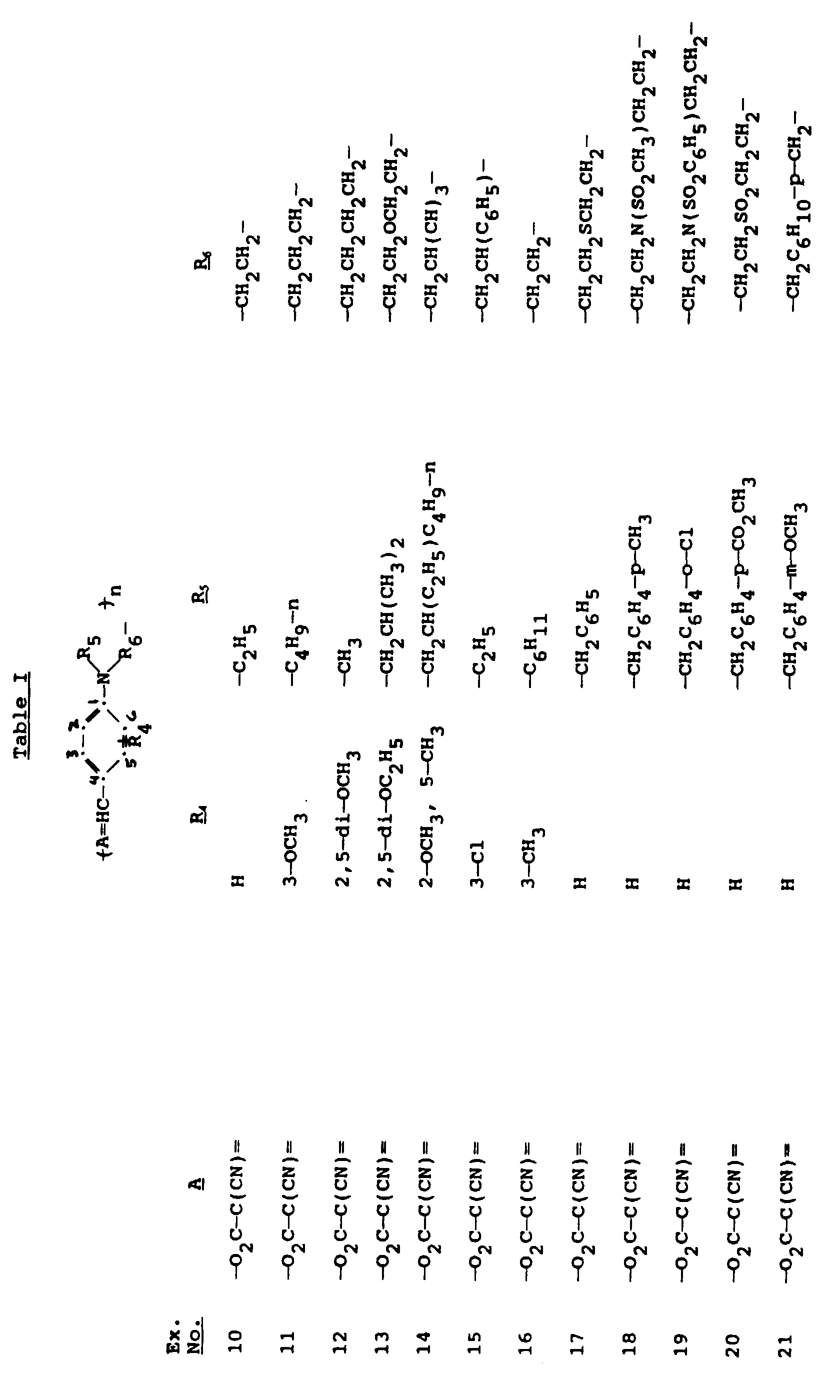

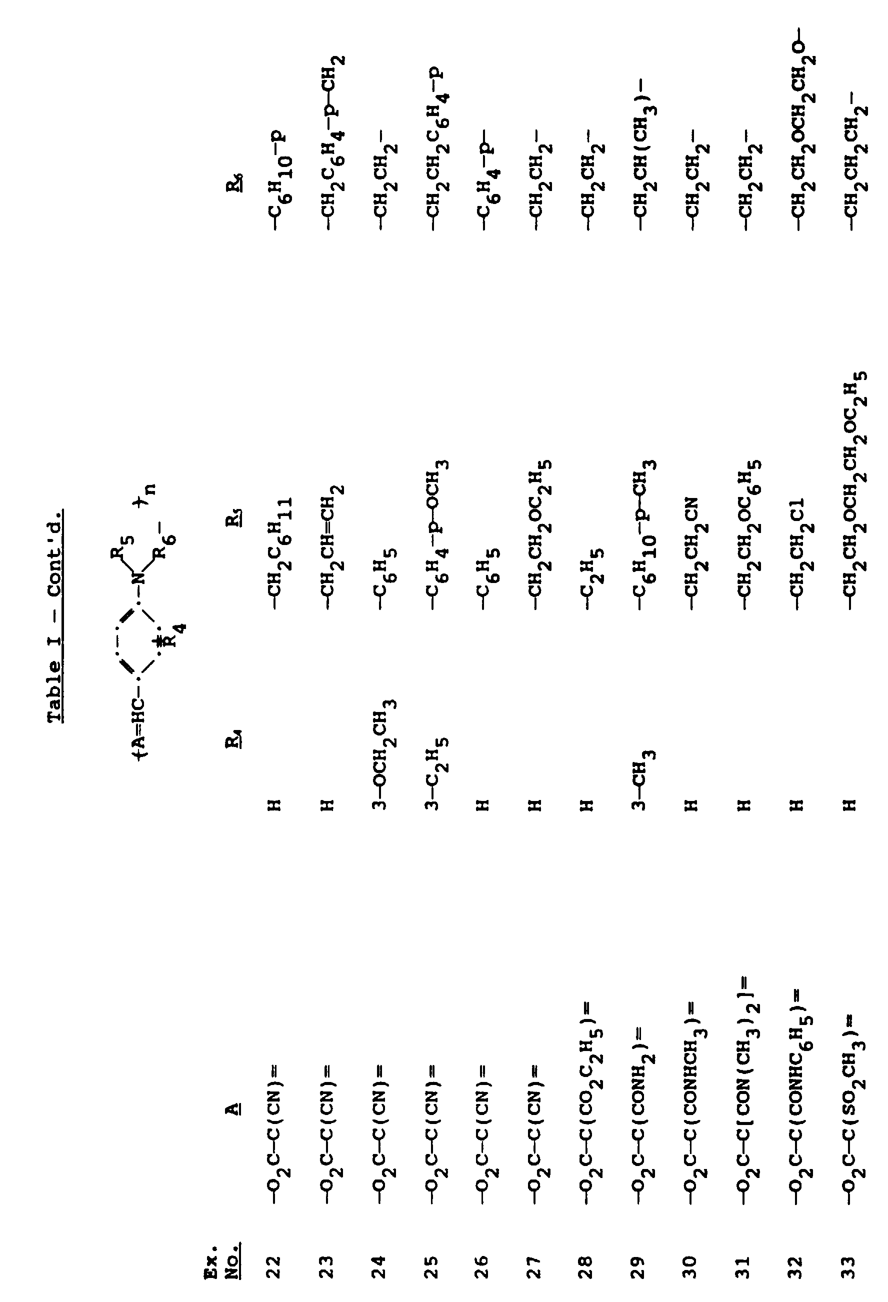

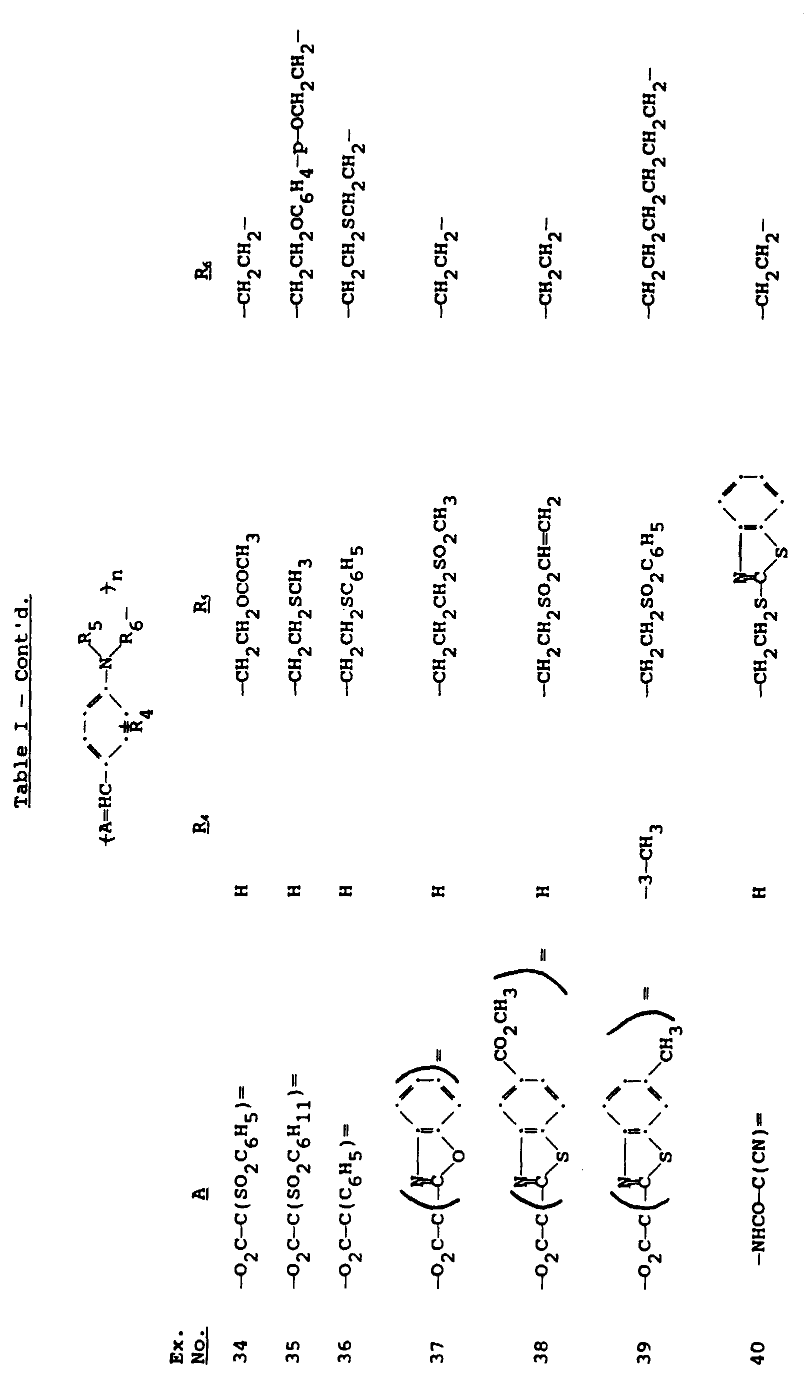

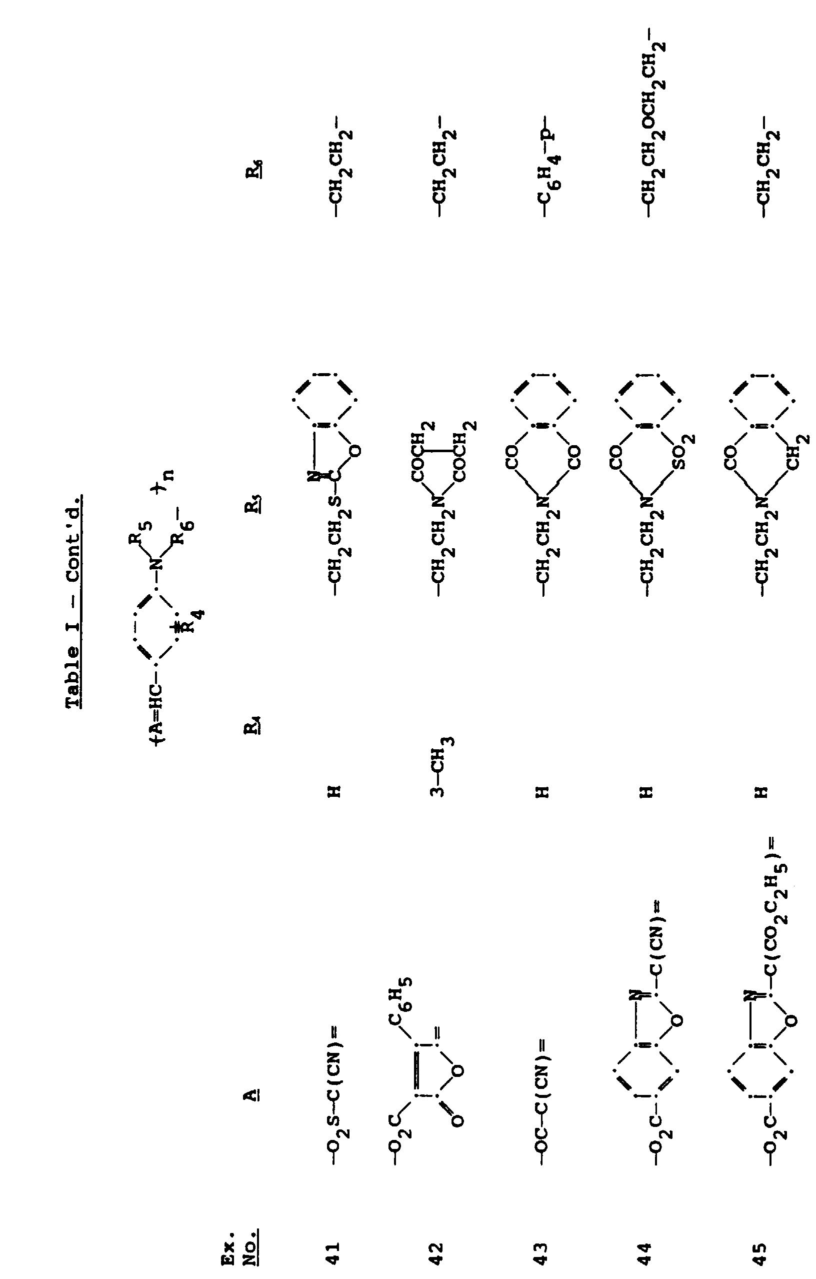

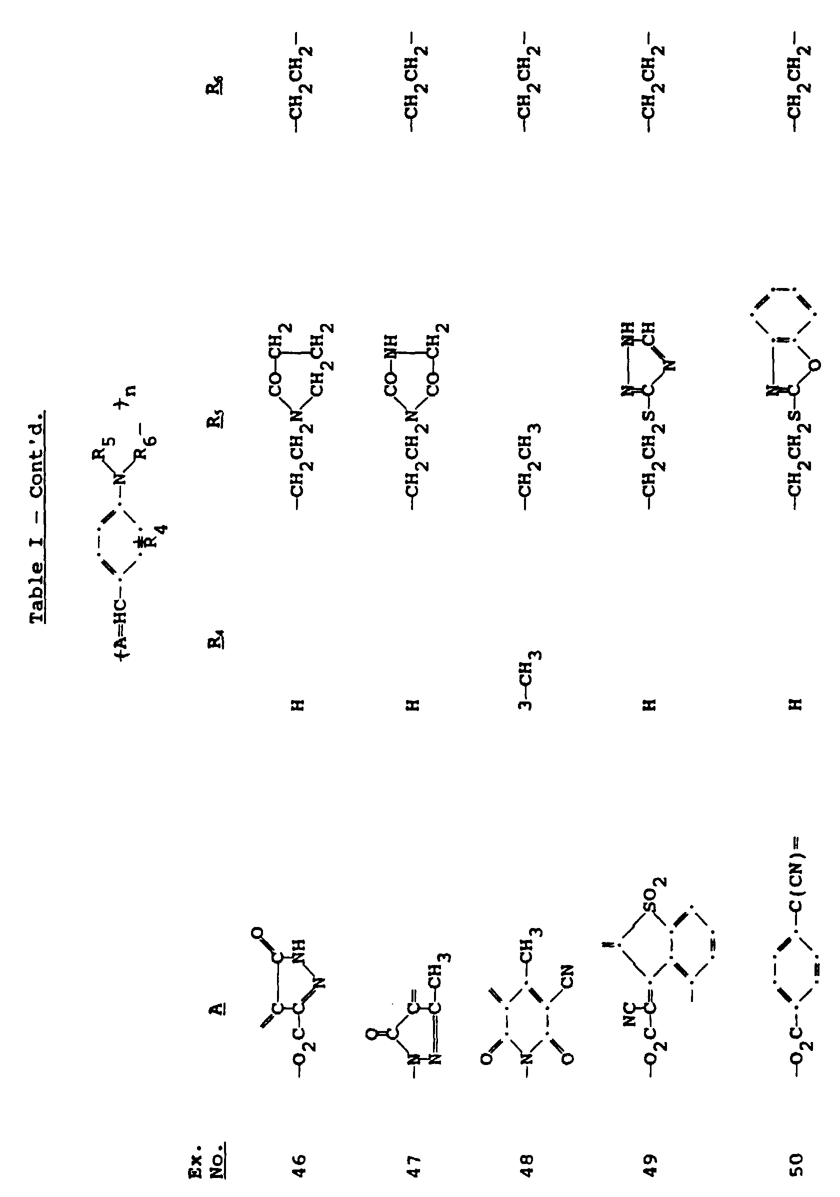

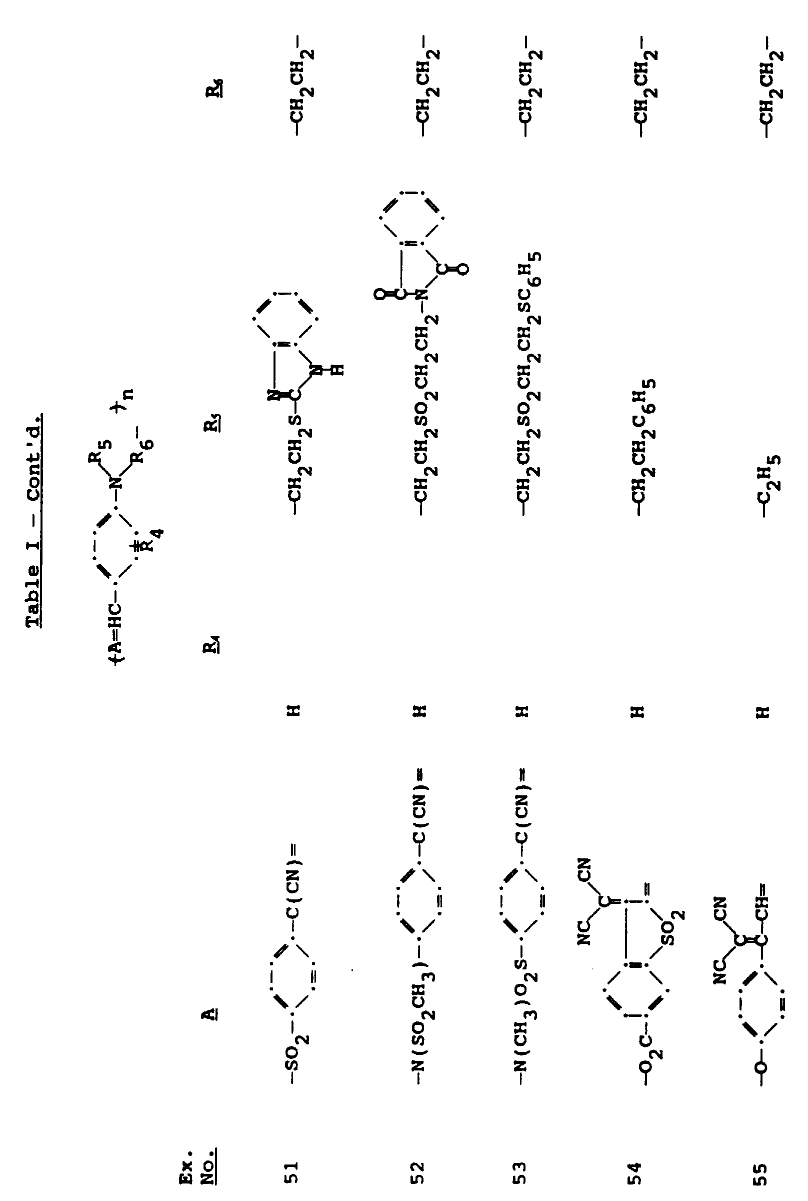

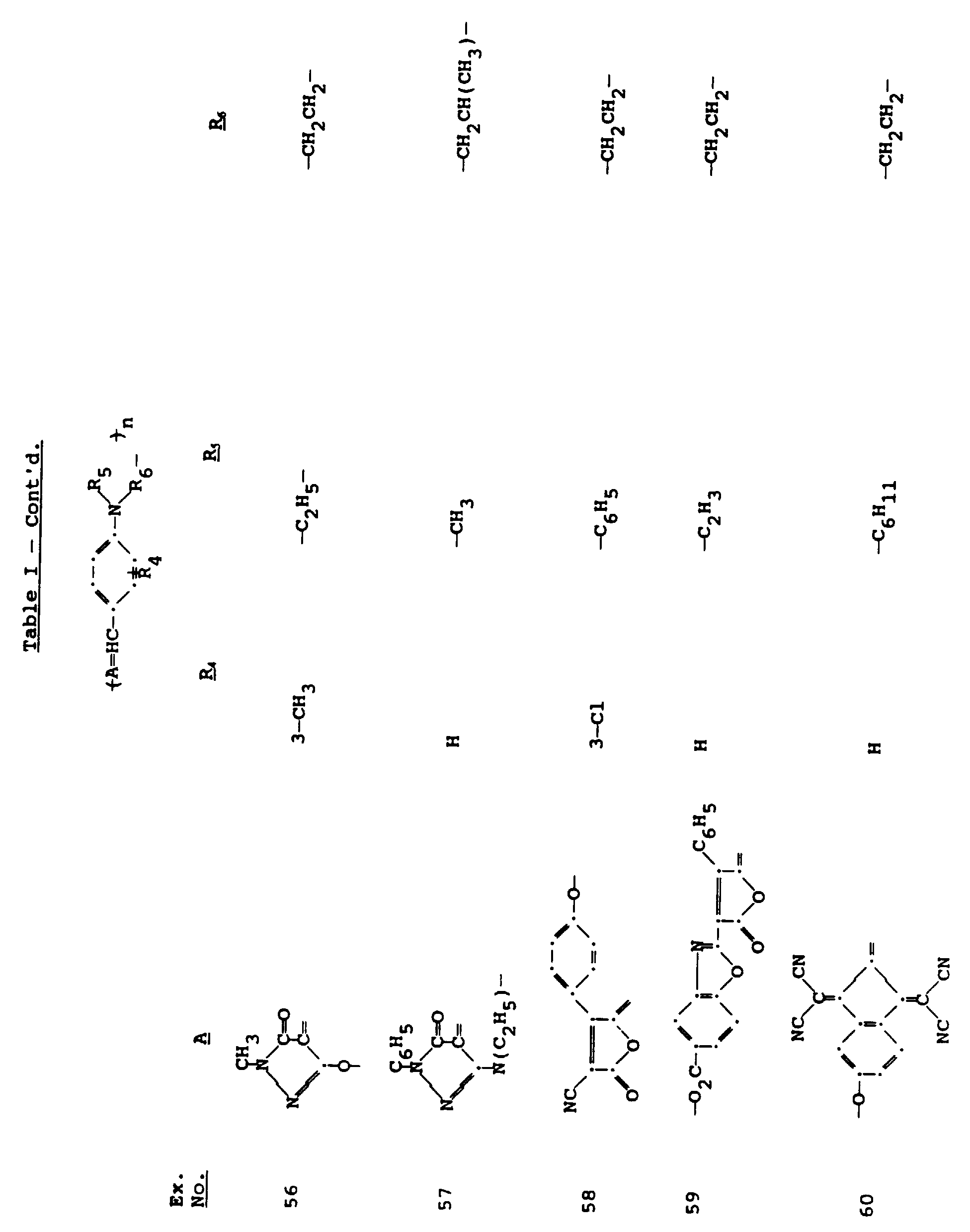

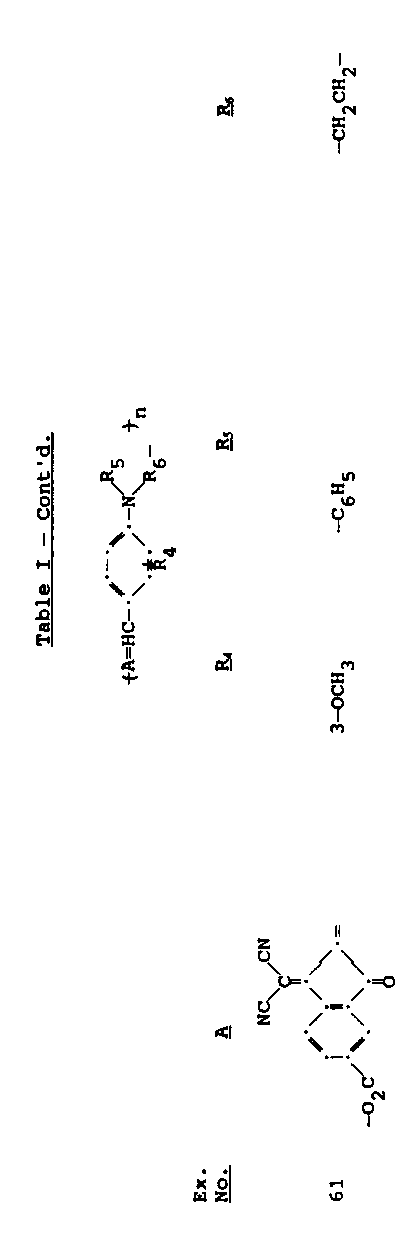

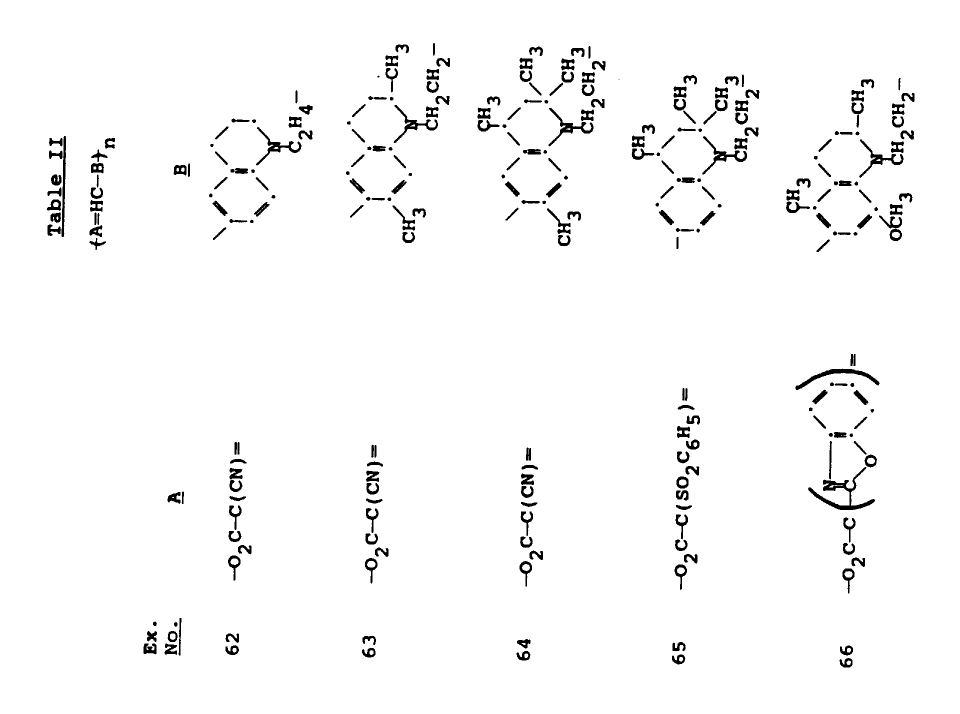

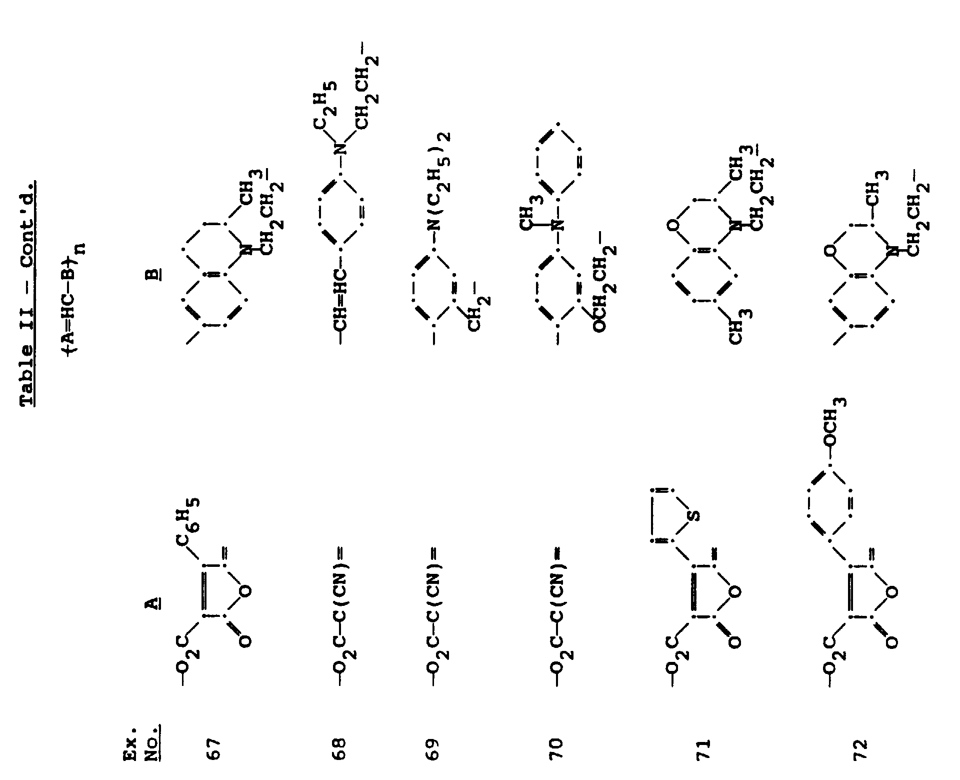

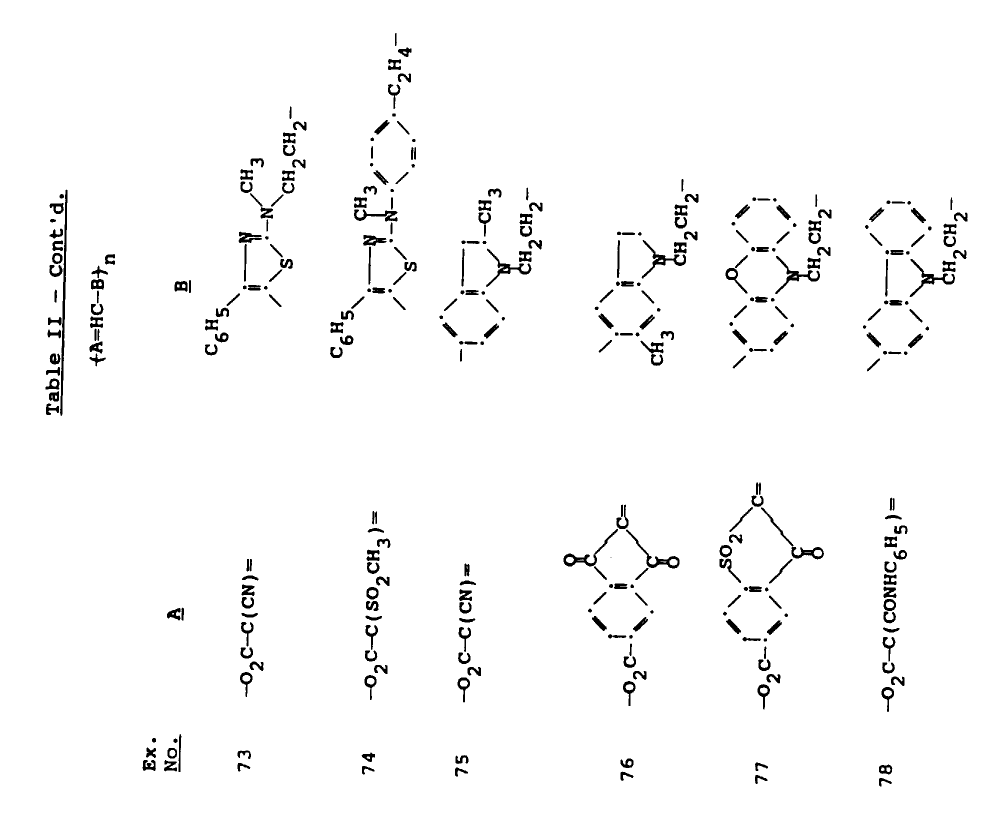

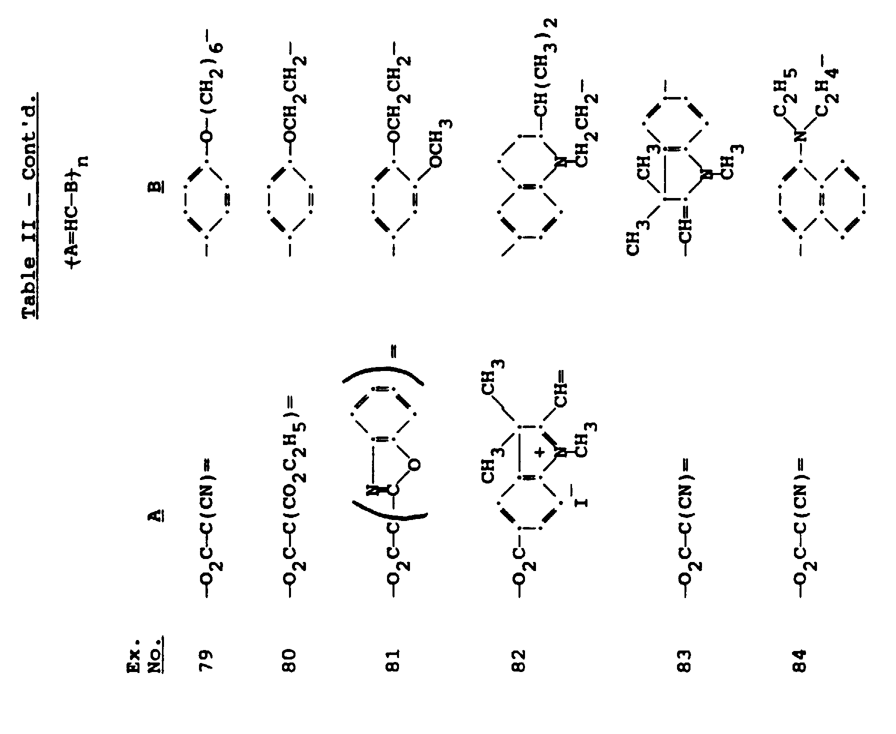

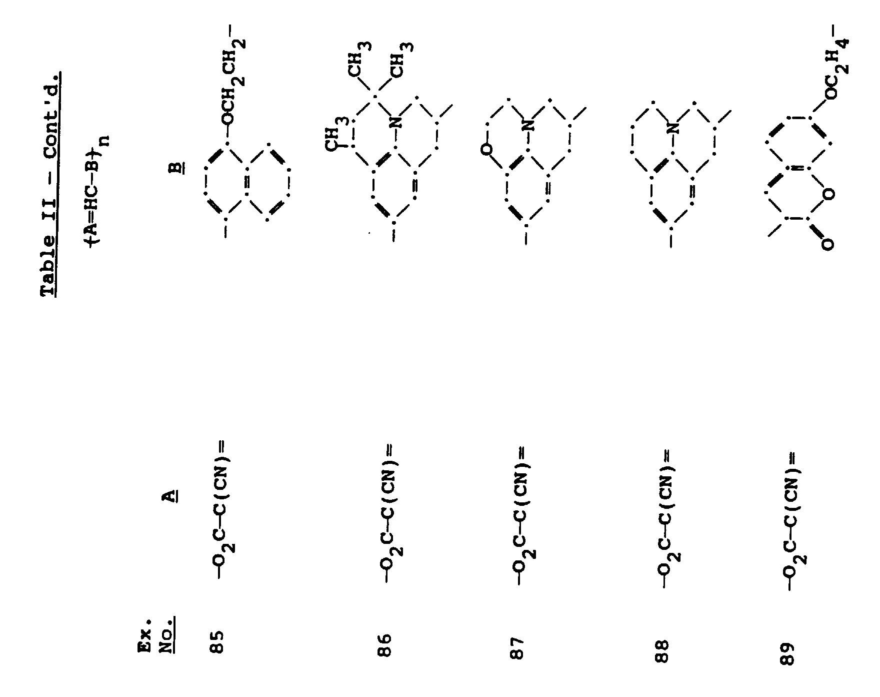

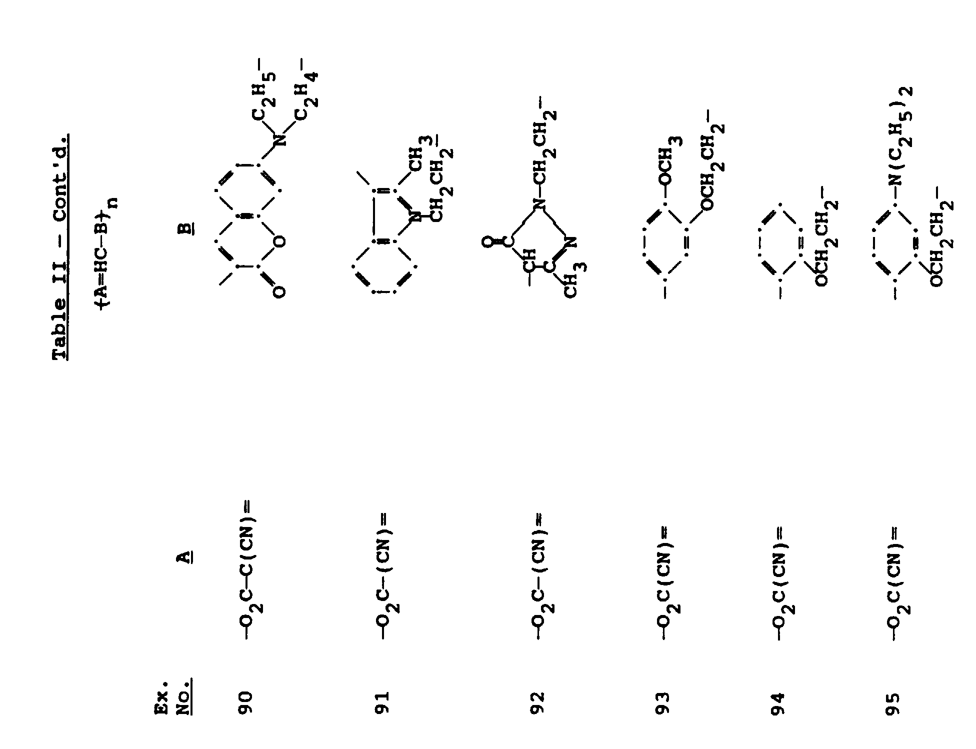

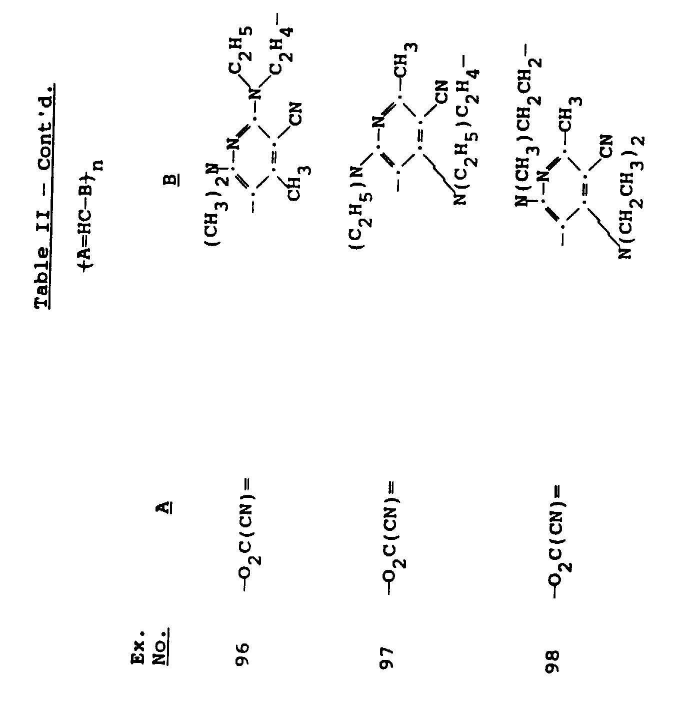

## Claims

1. A polymer represented by Formula (I)
-(A=HC-B-)ₙ- (I)
wherein active methylene residues (A) are selected from the formulae: 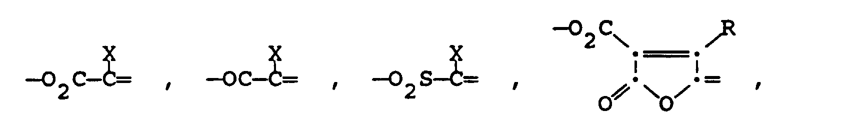 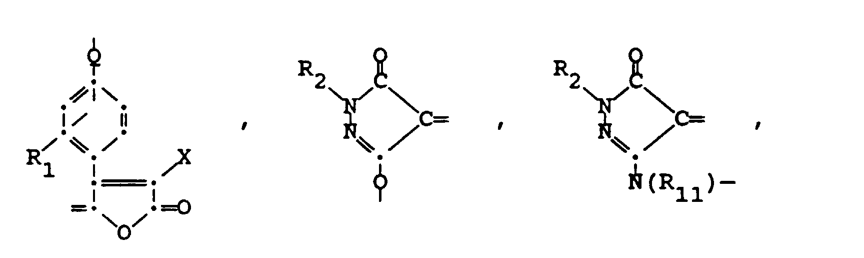 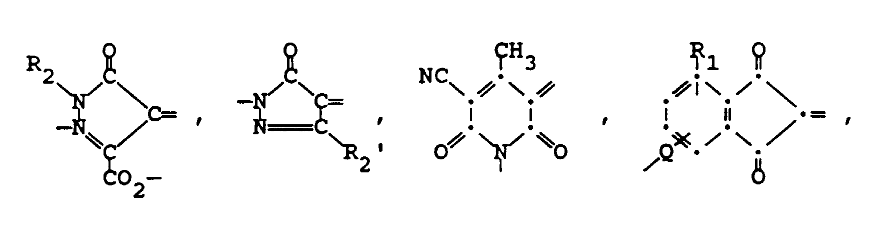 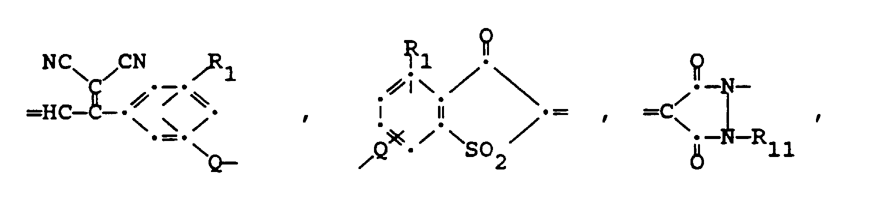 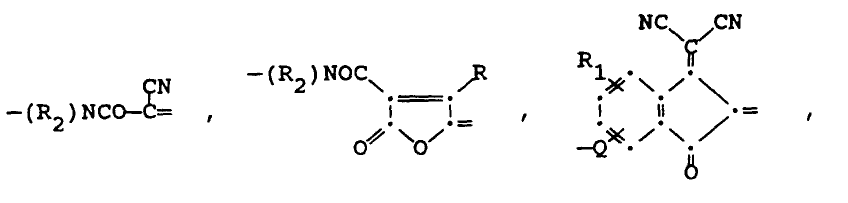 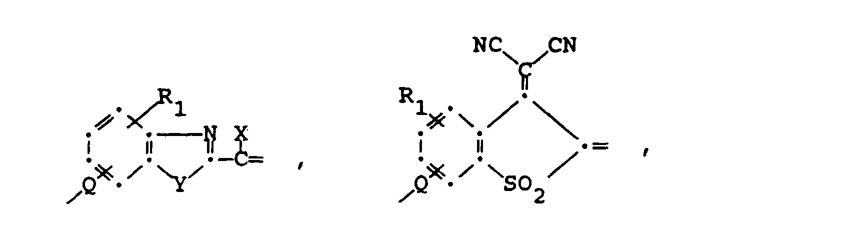 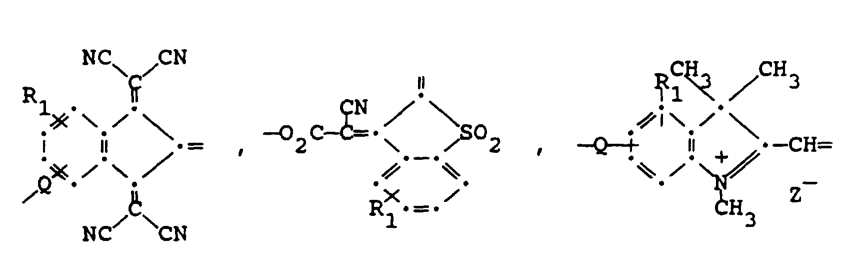 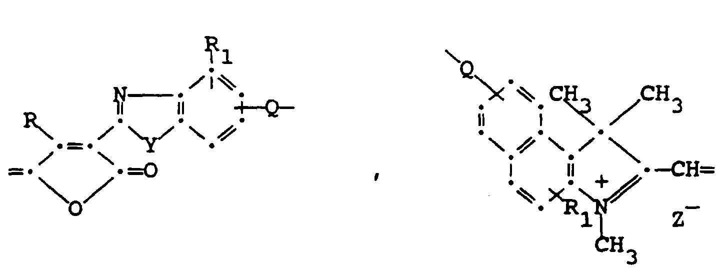 or 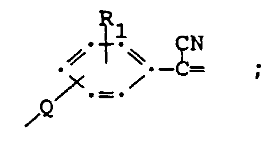 wherein Q is selected from a covalent bond, -CO₂-, -CO-, -S-, -O-, -SO₂-, -CON(R₂)-, -N(SO₂R₃)- or -SO₂N(R₂)-;
X is selected from cyano; unsubstituted and substituted carboxylic acid ester; unsubstituted and substituted carbamoyl; unsubstituted or substituted alkylsulfonyl; C₃-C₈ cycloalkysulfonyl; or arylsulfonyl or unsubstituted or substituted carbocyclic or heterocyclic aryl;
Y is selected from -O-, -S-, -NH- or substituted imino;
Z⁻ is a counter anion;
R is hydrogen, lower alkyl, or unsubstituted or substituted carbocyclic or heterocyclic aryl;
R₁ is selected from hydrogen, lower alkyl, lower alkoxy or halogen;
R₂ is selected from hydrogen, unsubstituted or substituted lower alkyl, C₃-C₈ cycloalkyl or unsubstituted or substituted carbocyclic or heterocyclic aryl;
R₃ is unsubstituted or substituted alkyl; C₃-C₈ cycloalkyl or unsubstituted carbocylic or heterocyclic aryl; wherein the divalent moiety B is represented by one of the following formulae: 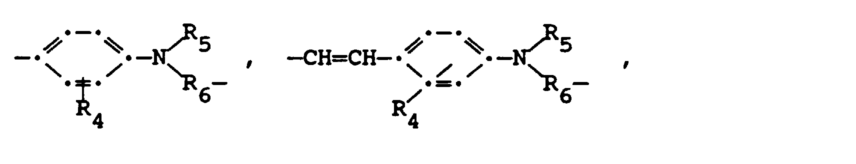 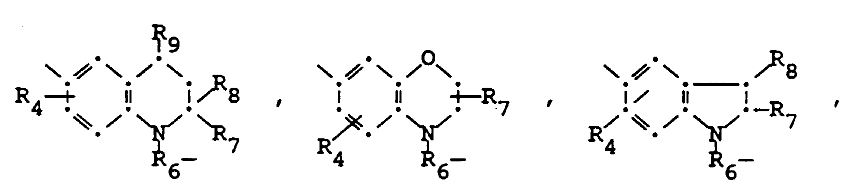 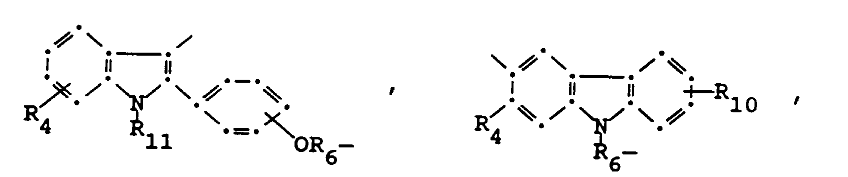 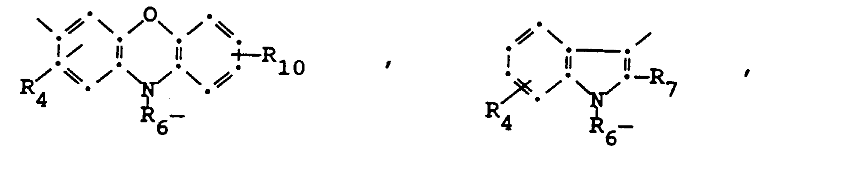 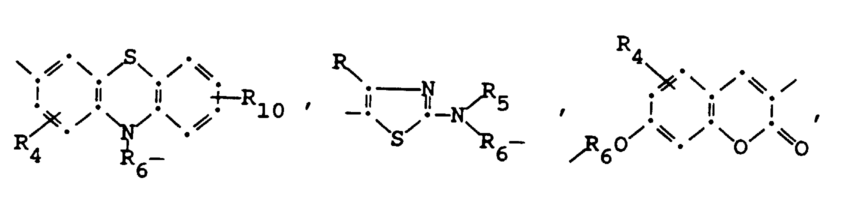 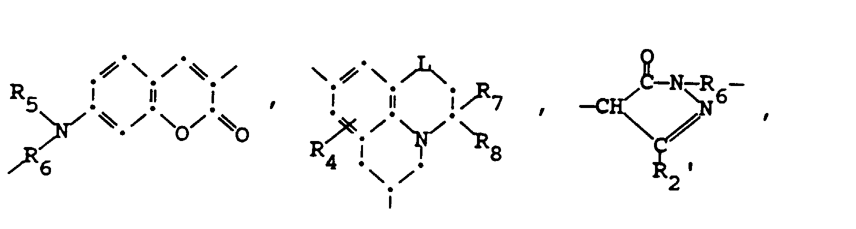 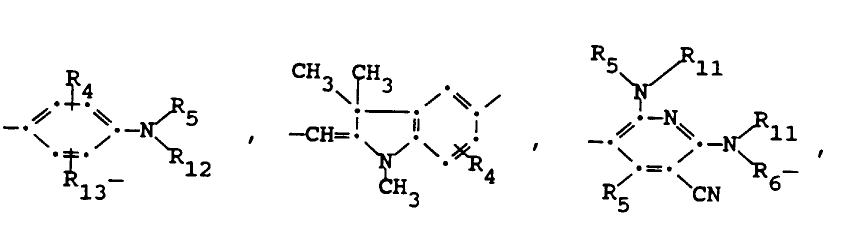 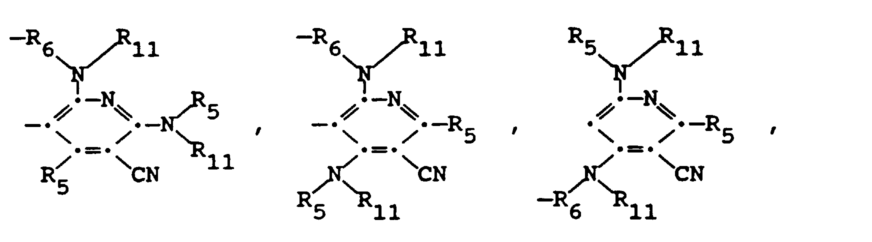 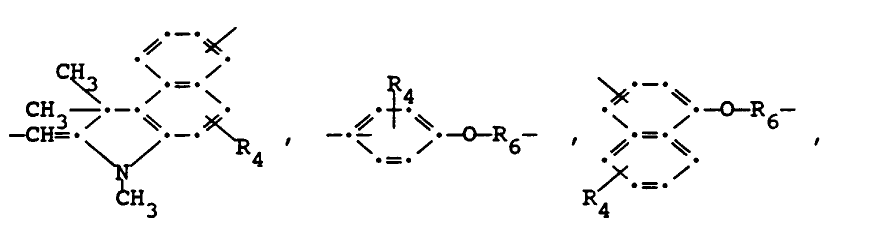 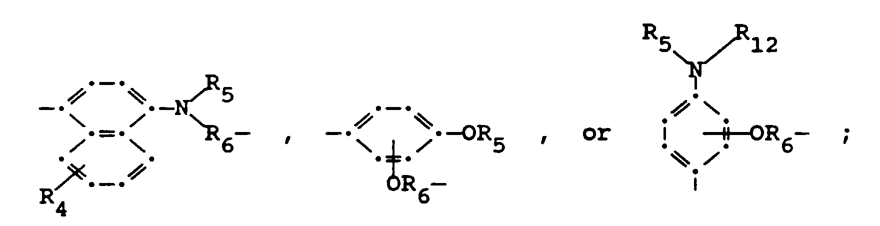
wherein
R₄ and R₁₀ are hydrogen or 1-2 substituents selected from lower alkyl, lower alkoxy or halogen;
R₅ and R₁₂ are selected from unsubstituted lower alkyl, lower alkenyl, C₃-C₈ cycloalkyl, or phenyl and substituted lower alkyl, C₃-C₈ cycloalkyl and phenyl;
R₆ is selected from unsubstituted or substituted lower alkylene, C₃-C₈ cycloalkylene, phenylene, alkylenephenylenealkylene, alkylene-(C₃-C₈)cycloalkylenealkylene, alkylene-O-alkylene, alkylene-S-alkylene, alkylene-SO₂-alkylene, alkylene-O-phenylene-O-alkylene, alkylene-N(SO₂R₃)alkylene or alkylene-phenylene;
R₇, R₈, R₉ are hydrogen or alkyl;
R₁₁ is hydrogen, lower alkyl or aryl;
R₁₃ is selected from lower alkylene, -O-R₆- or N(SO₂R₃)-R₆-;
L is selected from a direct bond, -O-, -CH₂- or -CH(CH₃)-; and n is an integer of from about 2 to about 40.

2. The polymer of Claim 1 wherein the active methylene moiety, A, has the structure -O₂C-C(CN)= and B is selected from the following formulae: 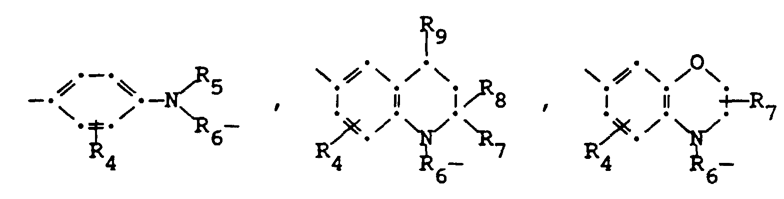 or 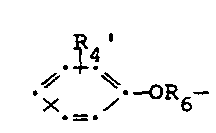 wherein R₄, R₇, R₈, and R₉ are as defined above; R₄' is selected from hydrogen or alkoxy;
R₅ is selected from the following groups: lower alkenyl; cycloalkyl; cycloalkyl substituted with one or two of lower alkyl, lower alkoxy or halogen; phenyl and phenyl substituted with one or two of lower alkyl, lower alkoxy, alkoxycarbonyl, halogen, alkanoylamino, cyano, nitro or alkylsulfonyl; straight or branched chain alkyl of 1-8 carbons and such alkyl substituted with one or more of the following: cycloalkyl and cycloalkyl substituted with one or two of lower alkyl, lower alkoxy or halogen; phenyl and phenyl substituted with one or two of lower alkyl, lower alkoxy, alkoxycarbonyl, halogen, alkanoylamino, cyano, nitro or alkylsulfonyl; cyano; halogen; 2-pyrrolidino; phthalimidino; vinylsulfonyl; acrylamido; o-benzoic sulfimido; alkoxy; alkoxyalkoxy; cyanoalkoxy; phenoxy; phenoxy substituted with lower alkyl, lower alkoxy, or halogen; groups of the formulae: 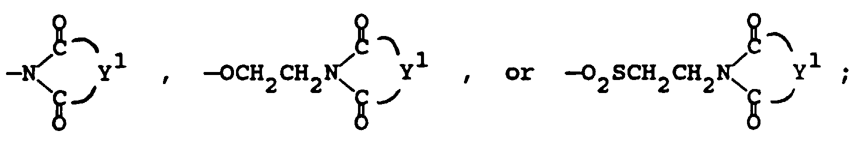 wherein Y¹ is selected from o-phenylene; o-phenylene substituted with lower alkyl, lower alkoxy, halogen or nitro; -O-CH₂-; -OCH₂CH₂-; -CH₂OCH₂-; -S-CH₂-; -CH₂SCH₂-; -NHCH₂-; -NHCH₂CH₂-; -N(alkyl)CH₂-; -N(alkyl)CH₂CH₂- or -NHC(C₆H₅)₂-; groups of the formulae: -S-R₁₄ , -SO₂C₂H₄SR₁₄ , 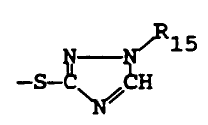 or 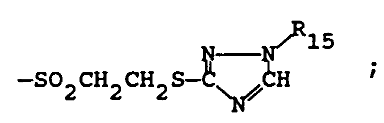 wherein R₁₄ is selected from lower alkyl; cycloalkyl; phenyl; phenyl substituted with one or more groups selected from lower alkyl, lower alkoxy or halogen; pyridyl; pyrimidinyl; benzoxazolyl; benzothiazolyl; benzimidazolyl; 1,3,4-thiadiazolyl, 1,3,4-oxadiazolyl; these heterocyclic radicals substituted with one or more groups selected from lower alkyl, lower alkoxy or halogen; wherein R₁₅ is selected from hydrogen, lower alkyl or benzyl; groups of the formulae:
-SO₂R₁₆; -SO₂N(R₁₇)R₁₈; -CON(R₁₇)R₁₈; N(R₁₇)COR₁₈
wherein R₁₆ is selected from cycloalkyl; cycloalkyl substituted with alkyl; allyl; phenyl; phenyl substituted with one or two groups selected from lower alkyl, lower alkoxy or halogen; lower alkyl; lower alkyl substituted with one or more groups selected from lower alkoxy, halogen, cyano, cycloalkyl, phenyl, phenoxy, alkylthio or alkylsulfonyl; R₁₇ and R₁₈ are each independently selected from hydrogen or those groups represented by R₁₆; wherein R₆ is selected from lower alkylene, alkylene-O-alkylene or alkylene-S-alkylene.

3. The polymers of Claim 1 having the structure 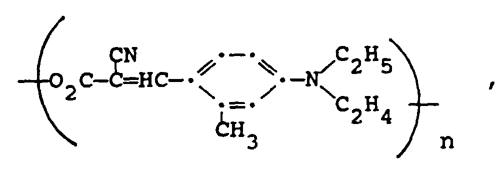 or

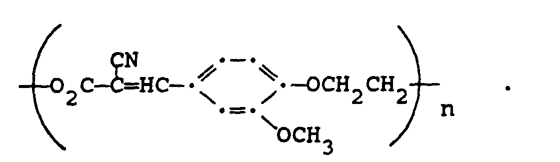

4. A light-absorbing thermoplastic polymer composition, which comprises one or more thermoplastic polymers and one or more light absorbing polymers represented by Formula (I).

5. The light-absorbing thermoplastic polymer composition of Claim 4 wherein the thermoplastic polymer is selected from a list consisting of polyesters, polyolefins, polyamides, polyimides, polyvinyl chloride, polyvinylidene chloride, polyurethanes, polycarbonates, cellulose esters, polyacrylates, polyvinylesters, polyester-amides, polystyrene, acrylonitrile-butadiene-styrene, and styrene-acrylonitrile.

6. The light-absorbing thermoplastic polymer composition of Claim 4, wherein the thermoplastic polymer is a polyolefin.

7. The light-absorbing thermoplastic polymer composition of Claim 4, wherein at least one of the thermoplastic polymers is a polycarbonate.

8. The light-absorbing thermoplastic polymer composition of Claim 4, wherein at least one of the thermoplastic polymers is a polyester.

9. The light-absorbing thermoplastic polymer composition of Claim 4, wherein at least one of the thermoplastic polymers is a cellulose ester or mixtures thereof.

10. A shaped or formed article comprised of the light-absorbing thermoplastic polymer composition of Claim 4.

## Patentansprüche

1. Polymer der Formel (I)
-(A=HC-B-)ₙ- (I)
worin aktive Methylenreste (A) aus folgenden Formeln gewählt werden: 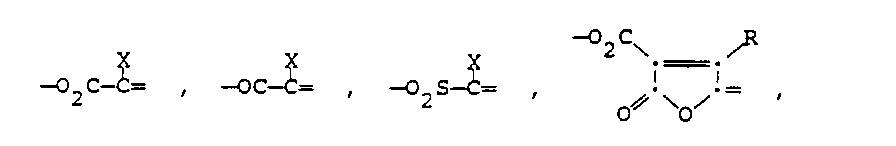 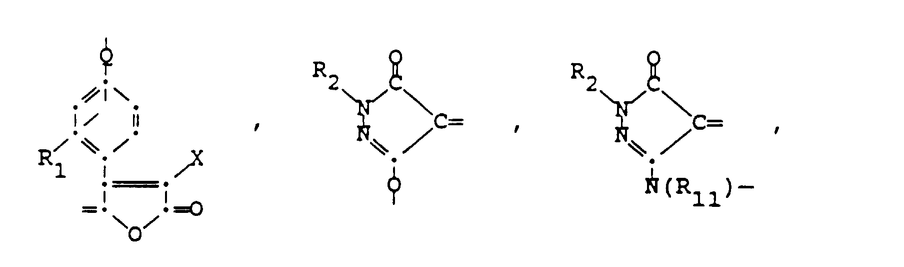 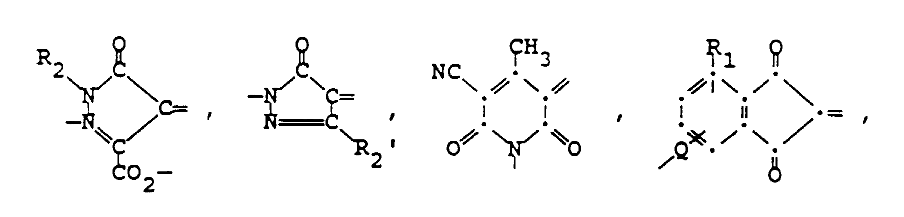 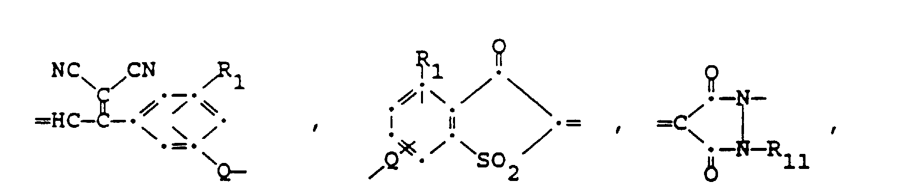 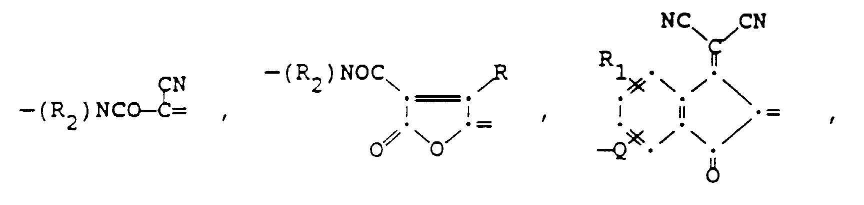 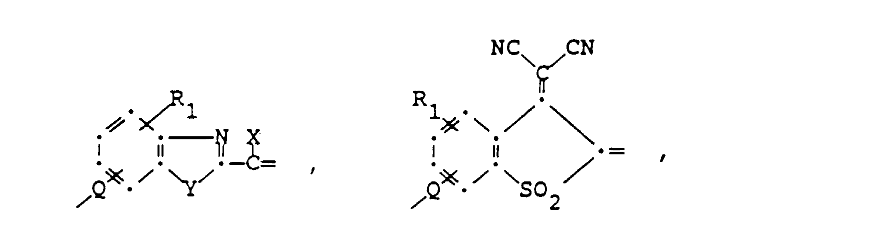 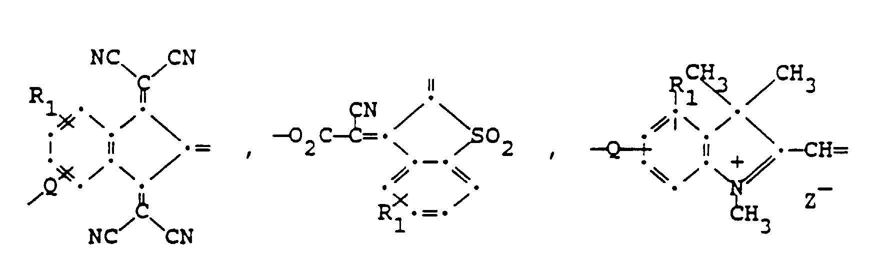 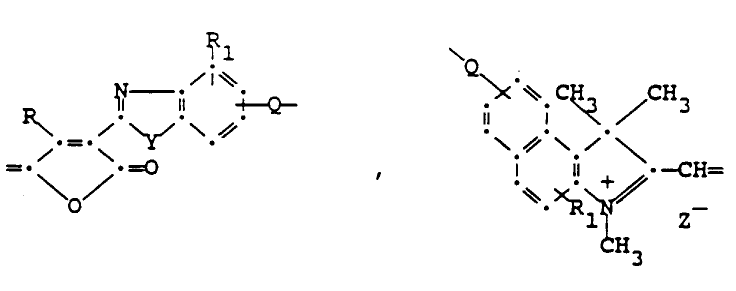 oder 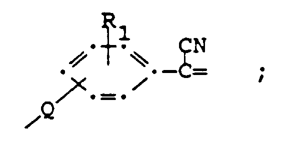 worin Q aus einer kovalenten Bindung, -CO₂-, -CO-, -S-, -O-, -SO₂-, -CON(R₂)-, -N(SO₂R₃)- oder -SO₂N(R₂)- gewählt wird;
X gewählt wird aus Cyano unsubstituiertem und substituiertem Carbonsäureester, unsubstituiertem und substituiertem Carbamoyl, unsubstituiertem oder substituiertem Alkylsulfonyl, C₃-C₈-Cycloalkylsulfonyl oder Arylsulfonyl oder unsubstituiertem oder substituiertem carbocyclischem oder heterocyclischem Aryl;
Y gewählt wird aus -O-, -S-, -NH- oder substituiertem Imino;
Z⁻ ein Gegenanion ist;
R Wasserstoff, niederes Alkyl oder unsubstituiertes oder substituiertes, carbocyclisches oder heterocyclisches Aryl ist;
R₁ gewählt wird aus Wasserstoff, niederem Alkyl, niederem Alkoxy oder Halogen;
R₂ gewählt wird aus Wasserstoff, unsubstituiertem oder substituiertem niederem Alkyl, C₃-C₈-Cycloalkyl oder unsubstituiertem oder substituiertem, carbocyclischem oder heterocyclischem Aryl;
R₃ unsubstituiertes oder substituiertes Alkyl, C₃-C₈-Cycloalkyl oder unsubstituiertes, carbocyclisches oder heterocyclisches Aryl ist; wobei der zweiwertige Rest B durch eine der folgenden Formeln repräsentiert wird: 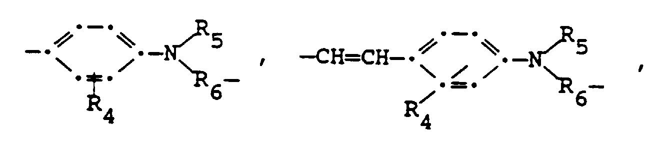 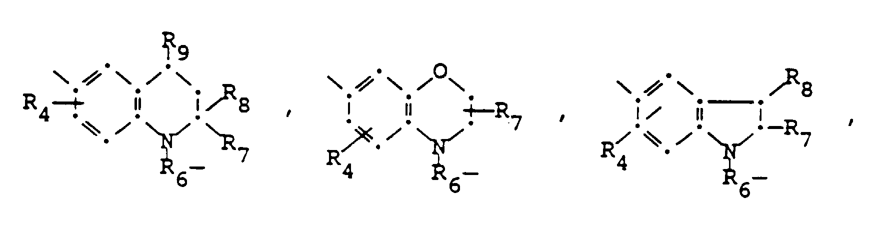 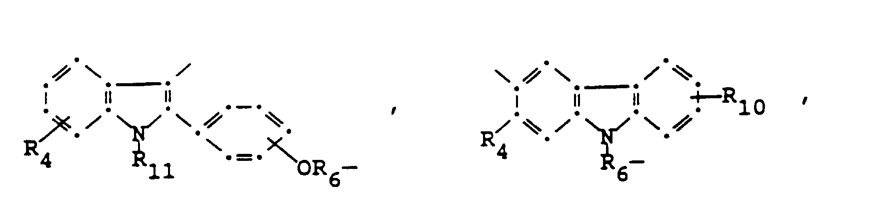 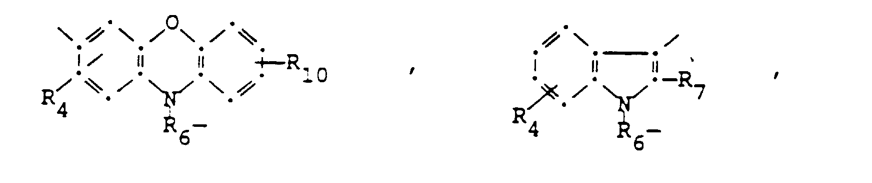 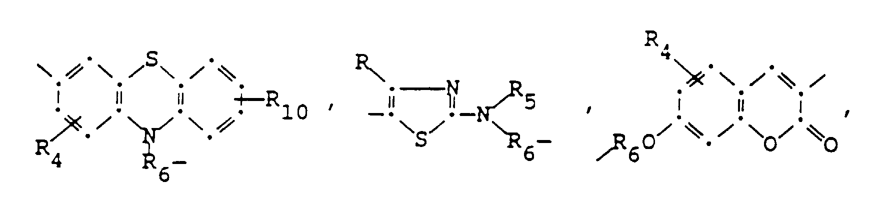 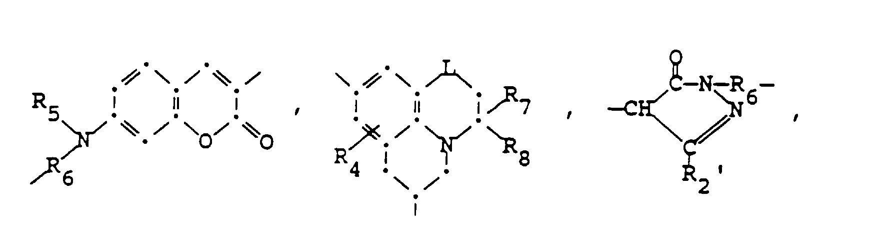 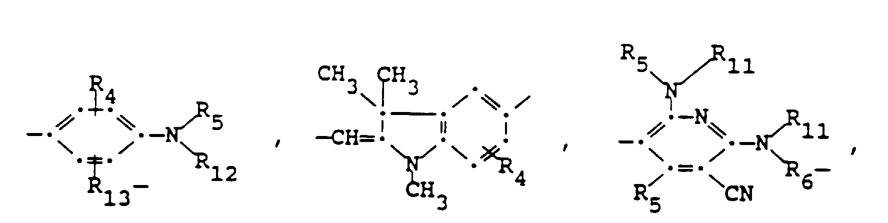 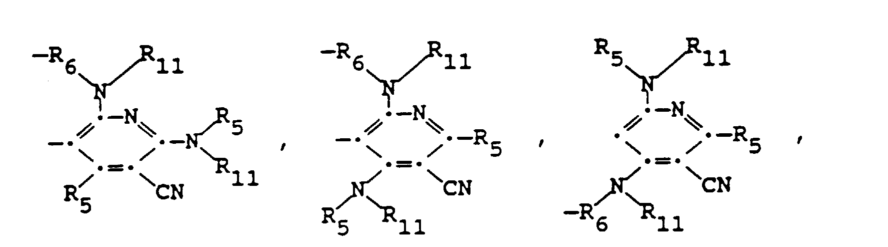 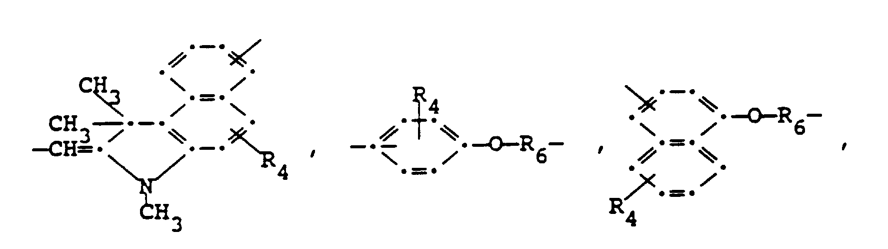 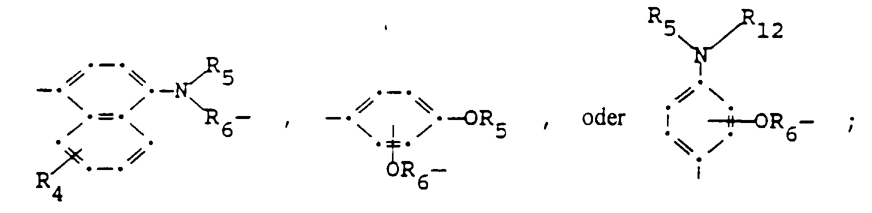
worin
R₄ und R₁₀ Wasserstoff oder 1 bis 2 Substituenten, gewählt aus niederem Alkyl, niederem Alkoxy oder Halogen, sind;
R₅ und R₁₂ aus unsubstituiertem, niederem Alkyl, niederem Alkenyl, C₃-C₈-Cycloalkyl oder Phenyl und substituiertem niederem Alkyl, C₃-C₈-Cycloalkyl und Phenyl gewählt werden;
R₆ gewählt wird aus unsubstituiertem oder substituiertem niederem Alkylen, C₃-C₈-Cycloalkylen, Phenylen, Alkylenphenylenalkylen, Alkylen-(C₃-C₈)cycloalkylenalkylen, Alkylen-O-alkylen, Alkylen-S-alkylen, Alkylen-SO₂-alkylen, Alkylen-O-phenylen-O-alkylen, Alkylen-N(SO₂R₃)alkylen oder Alkylenphenylen;
R₇, R₈, R₉ Wasserstoff oder Alkyl sind;
R₁₁ WasserstofL niederes Alkyl oder Aryl ist;
R₁₃ gewählt wird aus niederem Alkylen, -O-R₆- oder -N(SO₂R₃)-R₆-;
L gewählt wird aus einer direkten Bindung, -O-, -CH₂- oder -CH(CH₃)-; und n eine ganze Zahl von etwa 2 bis etwa 40 ist.

2. Polymer nach Anspruch 1, worin der aktive Methylenrest, A, die Struktur -O₂C-C(CN)= hat und B gewählt wird aus folgenden Formeln: 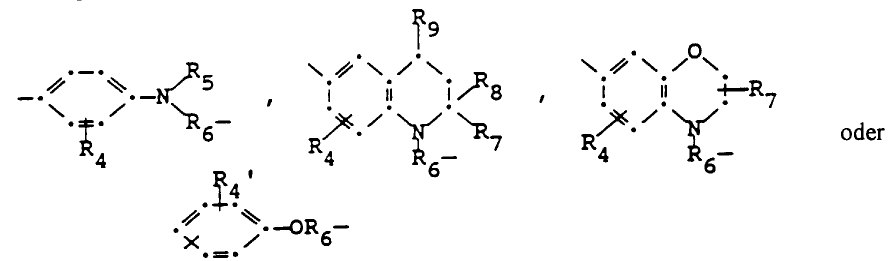 worin R₄, R₇, R₈ und R₉ die gleiche Bedeutung wie oben haben; R₄' aus Wasserstoff oder Alkoxy gewählt wird;
R₅ gewählt wird aus den folgenden Gruppen: niederem Alkenyl; Cycloalkyl; Cycloalkyl, substituiert mit einem oder zwei von niederem Alkyl, niederem Alkoxy oder Halogen; Phenyl und mit einem oder zwei von niederem Alkyl, niederem Alkoxy, Alkoxycarbonyl, Halogen, Alkanoylamino, Cyano, Nitro oder Alkylsulfonyl substituiertem Phenyl; geradkettigem oder verzweigtkettigem Alkyl mit 1 bis 8 Kohlenstoffatomen und einem solchen Alkyl, welches mit einem oder mehreren von folgendem substituiert ist: Cycloalkyl und mit einem oder zweien von niederem Alkyl, niederem Alkoxy oder Halogen substituiertem Cycloalkyl; Phenyl und mit einem oder zweien von niederem Alkyl, niederem Alkoxy, Alkoxycarbonyl, Halogen, Alkanoylamino, Cyano, Nitro oder Alkylsulfonyl substituiertem Phenyl; Cyano; Halogen; 2-Pyrrolidino; Phthalimidino; Vinylsulfonyl; Acrylamido; o-Benzoesulfimido; Alkoxy; Alkoxyalkoxy; Cyanoalkoxy; Phenoxy; mit niederem Alkyl, niederem Alkoxy oder Halogen substituiertem Phenoxy; Gruppen der Formeln: 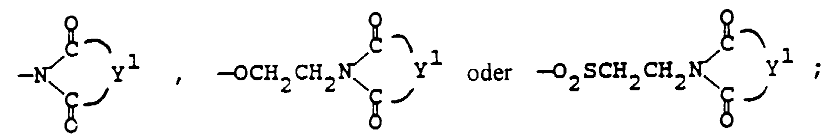 worin Y¹ gewählt wird aus o-Phenylen; o-Phenylen, welches mit niederem Alkyl, niederem Alkoxy oder Halogen oder Nitro substituiert ist; -O-CH₂-; -OCH₂CH₂-; -CH₂OCH₂-; -S-CH₂-; -CH₂SCH₂-; -NHCH₂-; -NHCH₂CH₂-; -N(Alkyl)CH₂-; -N(Alkyl)CH₂CH₂- oder -NHC(C₆H₅)₂-; Gruppen der Formeln:
-S-R₁₄, -SO₂C₂H₄SR₁₄, 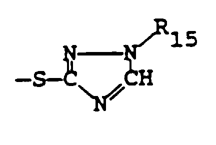 oder 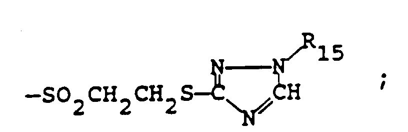 worin R₁₄ gewählt wird aus niederem Alkyl; Cycloalkyl; Phenyl; mit einer oder mehreren aus niederem Alkyl, niederem Alkoxy oder Halogen gewählten Gruppen substituiertem Phenyl; Pyridyl; Pyrimidinyl; Benzoxazolyl; Benzothiazolyl; Benzimidazolyl; 1,3,4-Thiadiazolyl, 1,3,4-Oxadiazolyl; diese heterocyclischen Reste, substituiert mit einer oder mehreren aus niederem Alkyl, niederem Alkoxy oder Halogen gewählten Gruppen; worin R₁₅ gewählt wird aus Wasserstoff, niederem Alkyl oder Benzyl; Gruppen der Formeln:
-SO₂R₁₆; -SO₂N(R₁₇)R₁₈; -CON(R₁₇)R₁₈; N(R₁₇)COR₁₈,
worin R₁₆ gewählt wird aus Cycloalkyl; mit Alkyl substituiertem Cycloalkyl; Allyl; Phenyl; mit einer oder zwei aus niederem Alkyl, niederem Alkoxy oder Halogen gewählten Gruppen substituiertem Phenyl; mit einer oder mehreren aus niederem Alkoxy, Halogen, Cyano, Cycloalkyl, Phenyl, Phenoxy, Alkylthio oder Alkylsulfonyl gewählten Gruppen substituiertem niederem Alkyl; wobei R₁₇ und R₁₈ jeweils unabhängig ausgewählt werden von Wasserstoff oder den durch R₁₆ repräsentierten Gruppen; worin R₆ gewählt wird aus niederem Alkylen. Alkylen-O-alkylen oder Alkylen-S-alkylen.

3. Polymere nach Anspruch 1 mit der Struktur

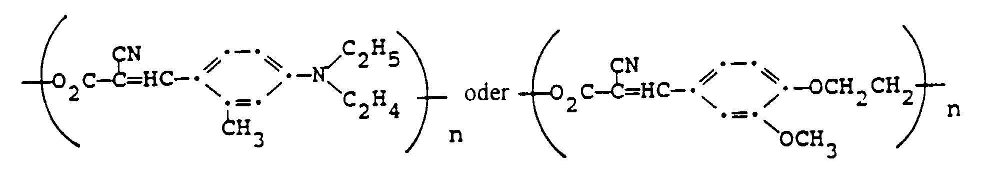

4. Lichtabsorbierende thermoplastische Polymermasse, welche ein oder mehrere thermoplastische Polymere und ein oder mehrere lichtabsorbierende Polymere der Formel (I) umfaßt.

5. Lichtabsorbierende thermoplastische Polymermasse nach Anspruch 4, worin das thermoplastische Polymer gewählt wird aus der aus Polyestern, Polyolefinen, Polyamiden, Polyimiden, Polyvinylchlorid, Polyvinylidenchlorid, Polyurethanen, Polycarbonaten, Celluloseestern, Polyacrylaten, Polyvinylestern, Polyesteramiden, Polystyrol, Acrylnitril-Butadien-Styrol und Styrol-Acrylnitril bestehenden Liste.

6. Lichtabsorbierende thermoplastische Polymermasse nach Anspruch 4, worin das thermoplastische Polymer ein Polyolefin ist.

7. Lichtabsorbierende thermoplastische Polymermasse nach Anspruch 4, worin mindestens eines der thermoplastischen Polymere Polycarbonat ist.

8. Lichtabsorbierende thermoplastische Polymermasse nach Anspruch 4, worin mindestens eines der thermoplastischen Polymere ein Polyester ist.

9. Lichtabsorbierende thermoplastische Polymermasse nach Anspruch 4, worin mindestens eines der thermoplastischen Polymere ein Celluloseester oder Mischungen davon ist.

10. Geformter oder gestalteter Artikel, umfassend die lichtabsorbierende thermoplastische Polymermasse nach Anspruch 4.

## Revendications

1. Polymère représenté par la formule (I):
-(A=HC-B-)ₙ- (I)
où des restes méthylènes actifs (A) sont choisis parmi les formules : 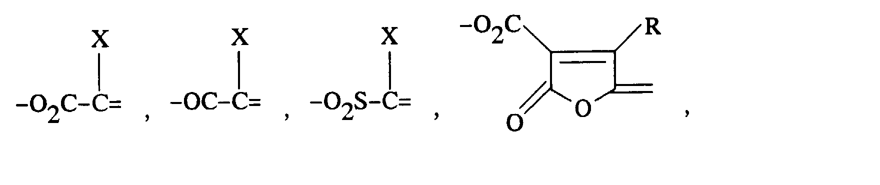 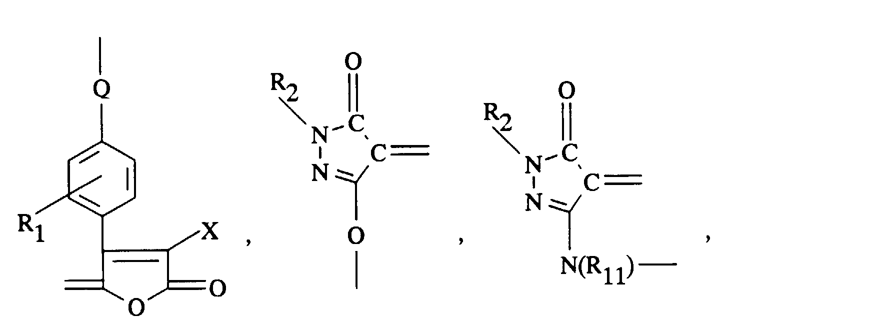 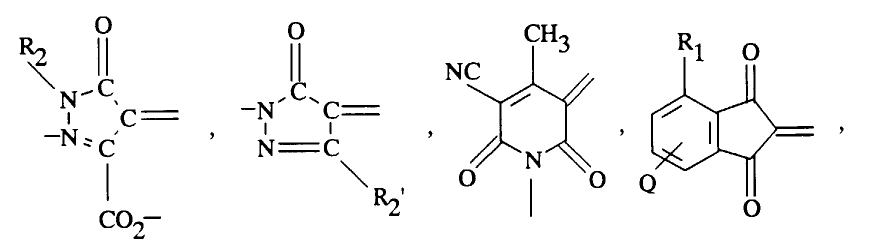 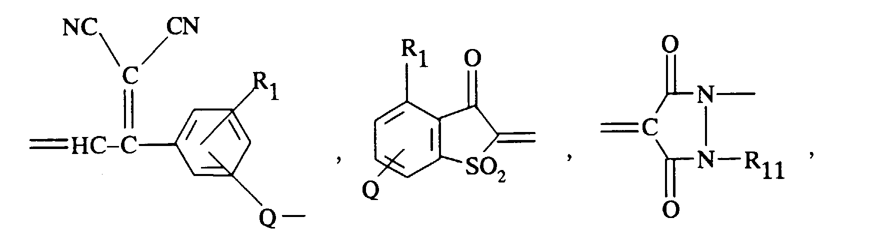 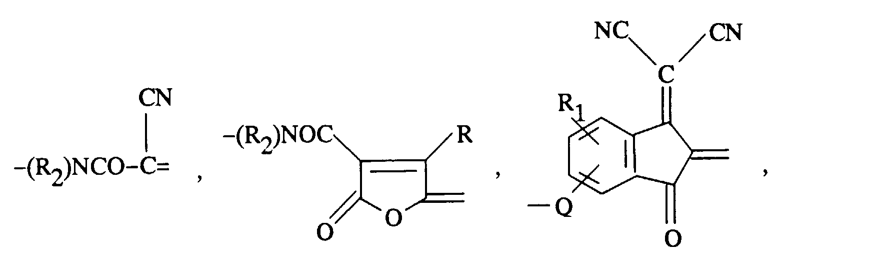 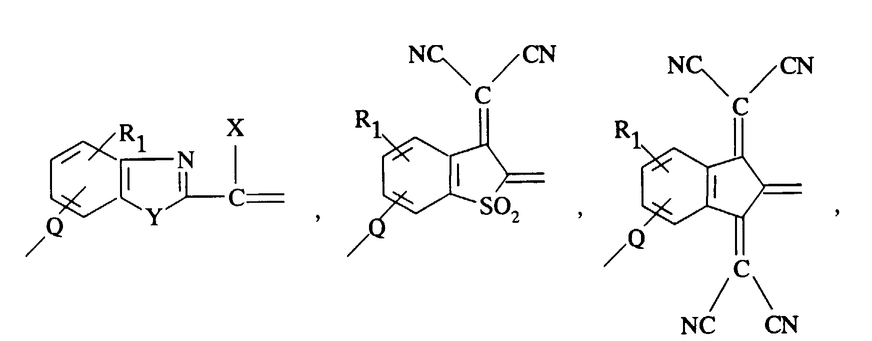 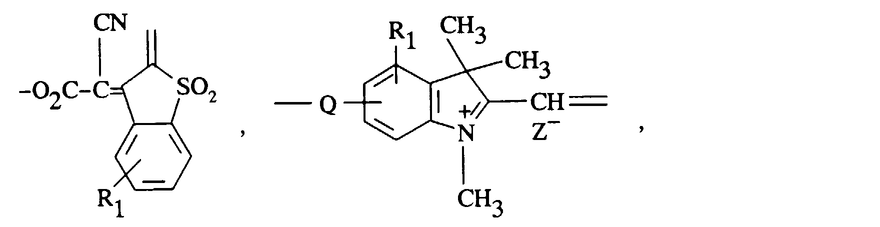 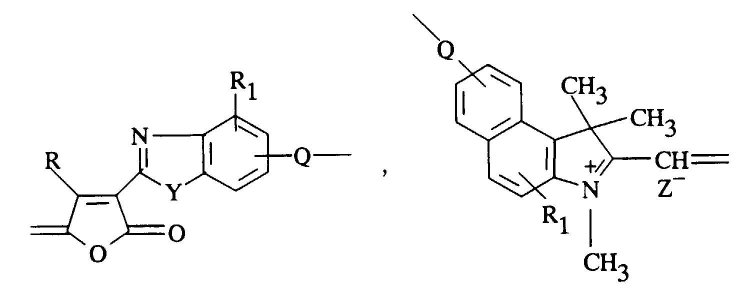 ou 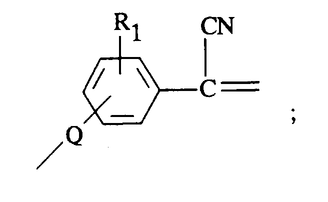 où Q est choisi parmi une liaison covalente, -CO₂-, -CO-, -S-, -O-, -SO₂-, -CON(R₂)-, -N(SO₂R₃)- ou -SO₂N(R₂)- ;
X est choisi parmi cyano ; ester d'acide carboxylique substitué ou non substitué ; carbamoyle substitué et non substitué ; alkylsulfonyle substitué ou non substitué ; cycloalkylsulfonyle C₃-C₈ ; ou arylsulfonyle ou aryle carbocyclique ou hétérocyclique substitué ou non substitué ;
Y est choisi parmi -O-, -S-, -NH- ou imino substitué ;
Z⁻ est un anion de signe opposé ;
R est un hydrogène, alkyle inférieur, aryle carbocyclique ou hétérocyclique non substitué ou substitué ;
R₁ est choisi parmi un hydrogène, alkyle inférieur, alcoxy inférieur ou halogène ;
R₂ est choisi parmi un hydrogène, alkyle inférieur substitué ou non substitué, cycloalkyle C₃-C₈ ou aryle carbocyclique ou hétérocyclique substitué ou non substitué ;
R₃ est un alkyle non substitué ou substitué ; cycloalkyle C₃-C₈ ou aryle carbocyclique ou hétérocyclique non substitué ; où le radical divalent B est représenté par l'une des formules suivantes : 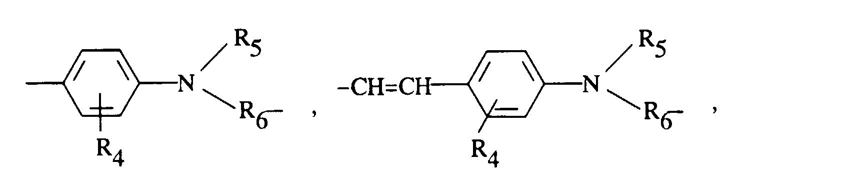 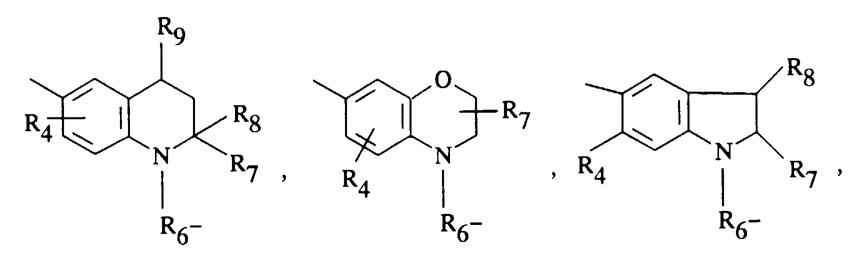 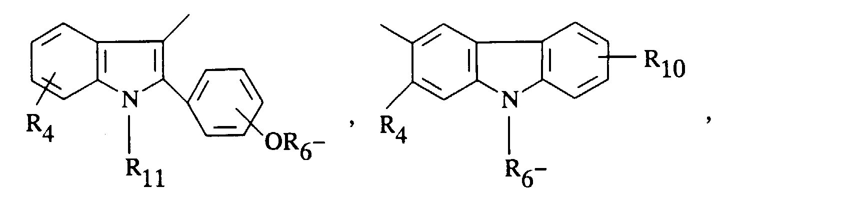 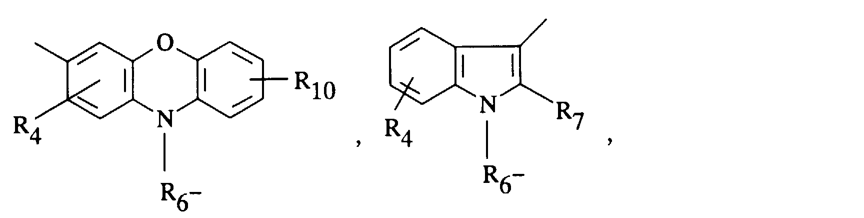 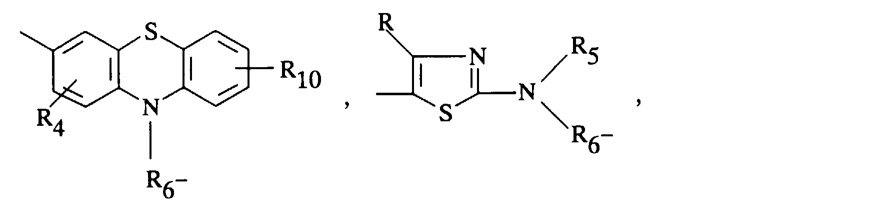 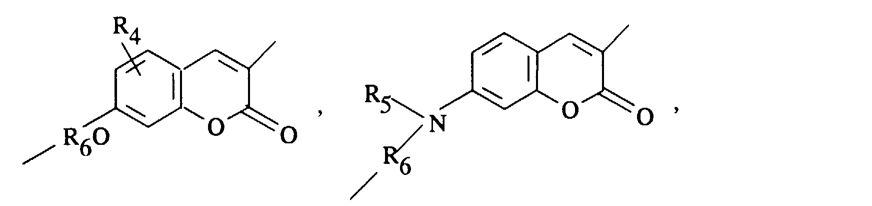 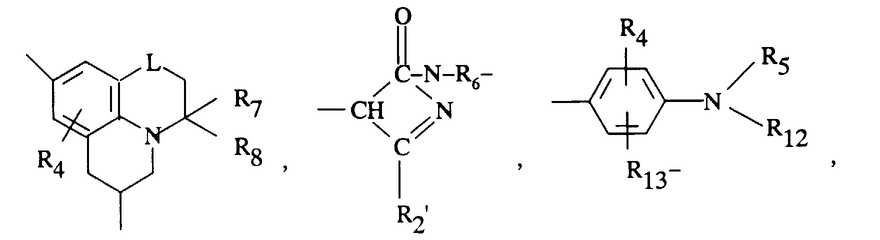 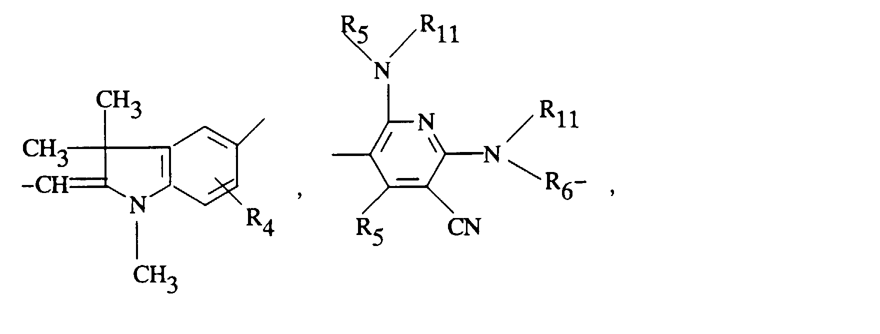 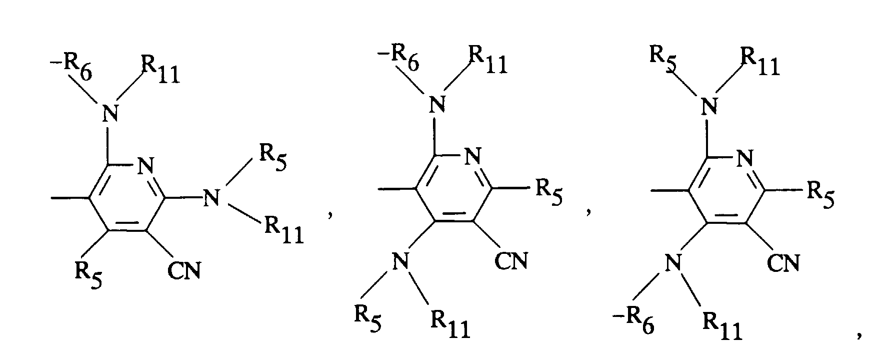 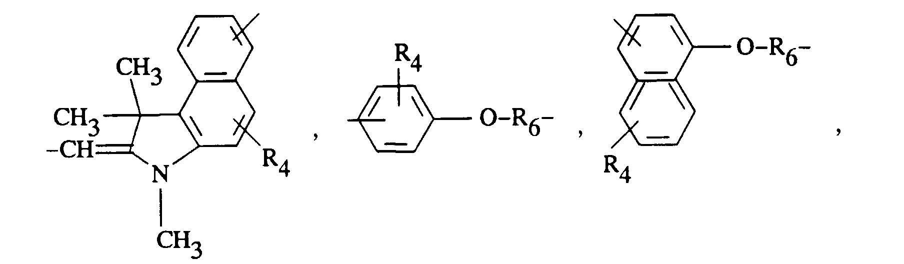 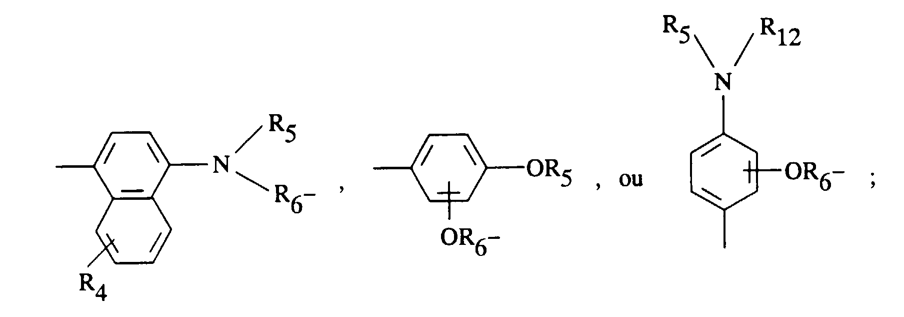
où R₄ et R₁₀ représentent un hydrogène ou 1-2 substituants choisis parmi les alkyle inférieur, alcoxy inférieur ou halogène ;
R₅ et R₁₂ sont choisis parmi les alkyle inférieur, alcényle inférieur, cycloalkyle C₃-C₈, ou phényle et alkyle inférieur substitué, cycloalkyle C₃-C₈ et phényle ;
R₆ est choisi parmi un alkylène inférieur non substitué ou substitué, cycloalkylène C₃-C₈, phénylène, alkylène-phénylènealkylène, alkylènecycloalkylène-(C₃-C₈)-alkylène, alkylène-O-alkylène, alkylène-S-alkylène, alkylène-SO₂-alkylène, alkylène-O-phénylène-O-alkylène, alkylène-N(SO₂R₃)alkylène ou alkylène-phénylène ;
R₇, R₈, R₉ représentent un hydrogène ou alkyle ;
R₁₁ est un hydrogène, alkyle inférieur ou aryle ;
R₁₃ est choisi parmi les alkylène inférieur, -O-R₆- ou N(SO₂R₃)-R₆- ;
L est choisi parmi une liaison simple, -O-, -CH₂- ou -CH(CH₃)- ; et n est un entier d'environ 2 à environ 40.

2. Polymère selon la revendication 1, où le radical méthylène actif A a la structure -O₂C-C(CN)= et B est choisi parmi les formules suivantes : 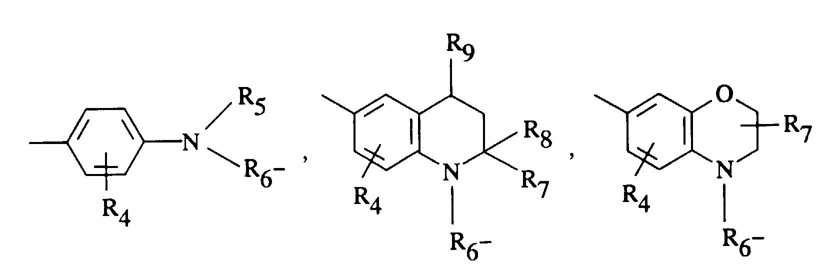 ou 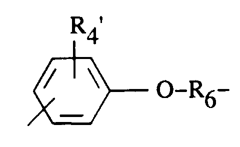 où R₄, R₇, R₈ et R₉ sont tels que définis ci-dessus ; R₄' est choisi parmi un hydrogène ou alcoxy ;
R₅ est choisi parmi les groupes suivants : alcényle inférieur ; cycloalkyle ; cycloalkyle substitué par un ou deux alkyles inférieurs, alcoxy inférieur ou halogène ; phényle et phényle substitué par un ou deux alkyles inférieurs, alcoxy inférieur, alcoxycarbonyle, halogène, alcanoylamino, cyano, nitro ou alkylsulfonyle ; chaîne alkyle droite ou ramifiée de 1-8 atomes de carbone et de tels alkyles substitués par un ou plusieurs des groupes suivants : cycloalkyle et cycloalkyle substitué par un ou deux alkyles inférieurs, alcoxy inférieur ou halogène ; phényle et phényle substitué par un ou deux alkyles inférieurs, alcoxy inférieur, alcoxycarbonyle, halogène, alcanoylamino, cyano, nitro ou alkylsulfonyle ; cyano ; halogène ; 2-pyrrolidino ; phtalimidino ; vinylsulfonyle ; acrylamido ; o-benzoïque sulfimido ; alcoxy ; alcoxyalcoxy ; cyanoalcoxy ; phénoxy ; phénoxy substitué par un alkyle inférieur, alcoxy inférieur ou halogène ; groupes de formules : 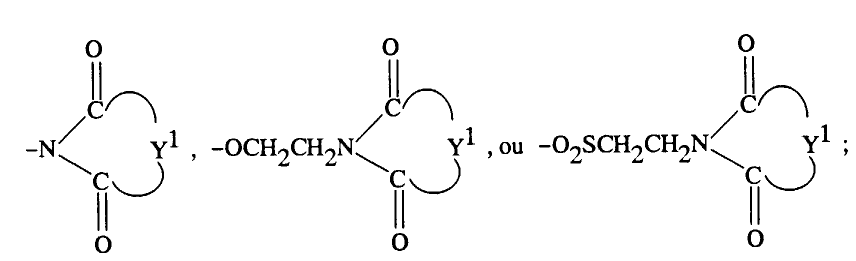 où Y¹ est choisi parmi o-phénylène; o-phénylène substitué par un alkyle inférieur, alcoxy inférieur, halogène ou nitro ; -O-CH₂- ; -OCH₂CH₂- ; -CH₂OCH₂- ; -S-CH₂- ; -CH₂SCH₂- ; -NHCH₂- ; -NHCH₂CH₂- ; -N(alkyl)CH₂- ; -N(alkyl)CH₂CH₂- ou -NHC(C₆H₅)₂- ; groupes de formules : 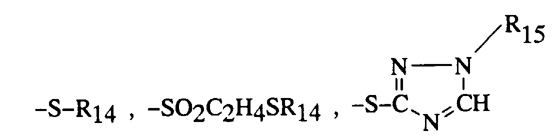 ou 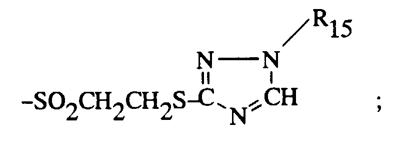 où R₁₄ est choisi parmi un alkyle inférieur ; cycloalkyle ; phényle ; phényle substitué par un ou plusieurs groupes choisis parmi les alkyle inférieur, alcoxy inférieur ou halogène ; pyridyle ; pyrimidinyle ; benzoxazolyle ; benzothiazolyle ; benzimidazolyle ; 1,3,4-thiadiazolyle, 1,3,4-oxadiazolyle ; ces radicaux hétérocycliques substitués par un ou plusieurs groupes choisis parmi les alkyle inférieur, alcoxy inférieur ou halogène ;
où R₁₅ est choisi parmi l'hydrogène, un alkyle inférieur ou benzyle ; des groupes de formules :
-SO₂R₁₆; -SO₂N(R₁₇)R₁₈ ; -CON(R₁₇)R₁₈ ; N(R₁₇)COR₁₈
où R₁₆ est choisi parmi les cycloalkyle, cycloalkyle substitué par alkyle ; allyle ; phényle ; phényle substitué par un ou deux groupes choisis parmi les alkyle inférieur, alcoxy inférieur ou halogène ; alkyle inférieur ; alkyle inférieur substitué par un ou plusieurs groupes choisis parmi les alcoxy inférieur, halogène, cyano, cycloalkyle, phényle, phénoxy, alkylthio ou alkylsulfonyle ;
R₁₇ et R₁₈ sont choisis indépendamment parmi l'hydrogène ou les groupes représentés par R₁₆ ; où R₆ est choisi parmi les alkylène inférieur, alkylène-O-alkylène ou alkylène-S-alkylène.

3. Polymères selon la revendication 1 ayant la structure : 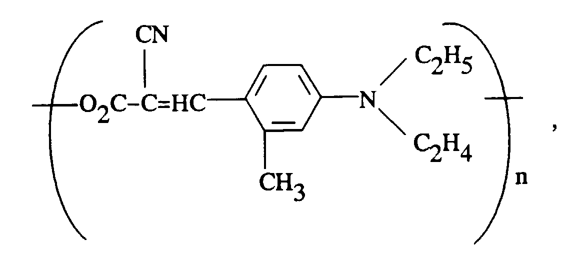 ou

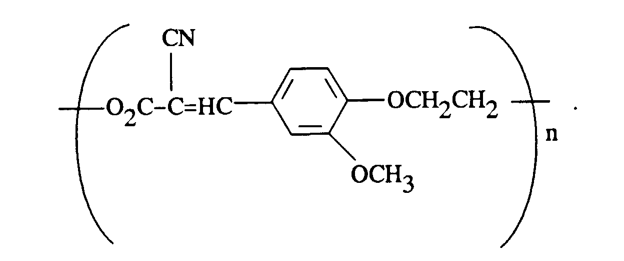

4. Composition de polymère thermoplastique absorbant la lumière, qui comprend un ou plusieurs polymères thermoplastiques et un ou plusieurs polymères absorbant la lumière représentés par la formule (I).

5. Composition de polymère thermoplastique absorbant la lumière selon la revendication 4, où on choisit le polymère thermoplastique parmi une liste constituée de polyesters, polyoléfines, polyamides, polyimides, poly(chlorure de vinyle), poly(chlorure de vinylidène), polyuréthanes, polycarbonates, esters de cellulose, polyacrylates, poly(esters vinyliques), polyesteramides, polystyrène, acrylonitrile-butadiène-styrène, et styrène-acrylonitrile.

6. Composition de polymère thermoplastique absorbant la lumière selon la revendication 4, où le polymère thermoplastique est une polyoléfine.

7. Composition de polymère thermoplastique absorbant la lumière selon la revendication 4, où au moins l'un des polymères thermoplastiques est un polycarbonate.

8. Composition de polymère thermoplastique absorbant la lumière selon la revendication 4, où au moins l'un des polymères thermoplastiques est un polyester.

9. Composition de polymère thermoplastique absorbant la lumière selon la revendication 4, où au moins l'un des polymères thermoplastiques est un ester de cellulose ou des mélanges de ces polymères.

10. Article formé ou moulé comprenant une composition de polymère thermoplastique absorbant la lumière selon la revendication 4.
